# EUROPÄISCHE PATENTANMELDUNG

(11) **EP 0 167 490 A1**
(43) Veröffentlichungstag der Anmeldung: **08.01.1986**
(21) Anmeldenummer: 85810302.1
(22) Anmeldetag: 01.07.1985
(51) Int. Cl.: C09B 62/20, C09B 62/503, D06P 3/66

(54) **Reaktivfarbstoffe, deren Herstellung und Verwendung**

(30) Priorität: 05.07.1984 CH 3257/84
(71) Anmelder: CIBA-GEIGY AG, 4002 Basel (CH)
(72) Erfinder: Tzikas, Athanassios, Dr., CH-4133 Pratteln (CH)

(57) **Zusammenfassung**

Reaktivfarbstoffe der Formel 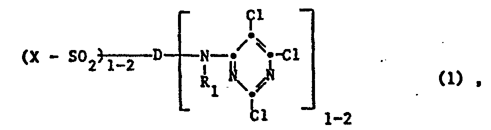
worin D der Rest eines Farbstoffes der Mono- oder Polyazo-, Metallkomplexazo-, Anthrachinon-, Phthalocyanin-, Formazan-, Azomethin-, Dioxazine-, Phenazin-, Stilben-, Triphenylmethan-, Xanthen-, Thioxanthon-, Nitroaryl-, Naphthochinon-, Pyrenchinon- oder Perylentetracarbimid-Reihe, R₁ Wasserstoff oder ein gegebenenfalls substituierter C₁₋₄-Alkylrest, und X die Vinyl-, β-Sulfatoäthyl-, β-Thiosulfatoäthyl-, β-Chloräthyl- oder β-Acetoxyäthyl-Gruppe ist, ausgenommen den Reaktivfarbstoff der Formel: 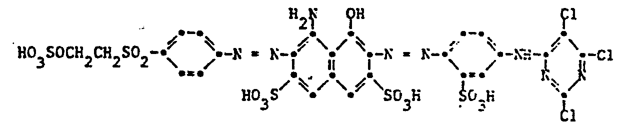
eignen sich besonders zum Färben und Bedrucken von cellulosehaltigen Fasermaterialien nach dem Kaltverweilverfahren und geben, bei hoher färberischer Ausbeute, Färbungen und Drucke mit guten Echtheitseigenschaften.

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere inbezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel 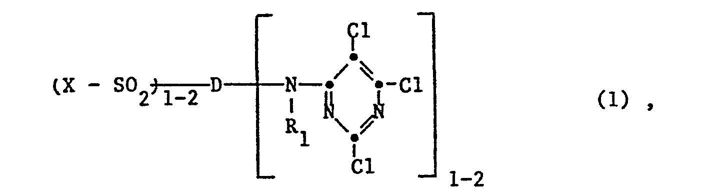
worin D der Rest eines Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R₁ Wasserstoff oder ein gegebenenfalls substituierter C₁₋₄-Alkylrest, und X die Vinyl-, β-Sulfatoäthyl-, β-Thiosulfatoäthyl-, β-Chloräthyl- oder β-Acetoxy- äthyl-Gruppe ist, ausgenommen den Reaktivfarbstoff des Beispiel 38 der JP-OS 57-57754.

Der Rest D in Formel (1) kann in der üblichen Weise substituiert sein. Als Beispiele für weitere Substituenten am Rest D seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-ß-hydroxy- äthylamino, N,N-Di-ß-sulfatoäthylamino, Sulfobenzylamino, N,N-Disulfo- benzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyäthyl)-sulfamoyl, N,N-Di-(ß-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest Rₗ ist, falls es sich um einen Alkylrest handelt, geradkettig oder verzweigt; er kann weitersubstituiert sein, z.B. durch Halogen, Hydroxy, Cyan, C1-4-Alkoxy, Carboxy oder Sulfo. Als Beispiele für R und R₂ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxy- äthyl, β-Aethoxyäthyl, β-Methoxypropyl, β-Chloräthyl, y-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist R Wasserstoff, Methyl oder Aethyl.

Bevorzugt sind Reaktivfarbstoffe der Formel (1), worin D der Rest eines Mono-oder Disazofarbstoffes oder eines Metallkomplexazofarbstoffes ist. In diesem Falle sind die Reaktivreste, d.h. der Vinyl- oder β-Sulfatoäthyletc. -sulfonylrest und der 2,4,5-Trichlorpyrimidylrest an verschiedene oder an gleiche Reste von Ausgangskomponenten, nämlich Diazo- und Kupplungskomponenten, gebunden. Die Reaktivfarbstoffe haben dann z.B. die Formel

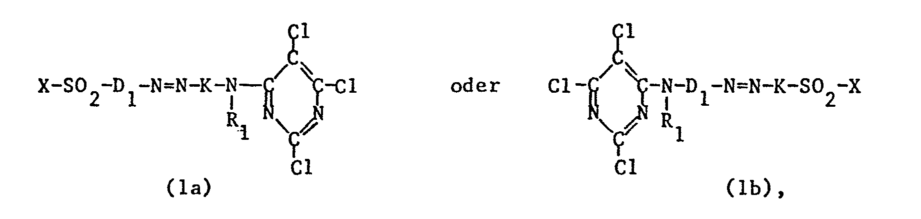

worin R₁ und X die unter Formel (1) angegebenen Bedeutungen haben, und D der Rest einer Diazokomponente, und K der Rest einer Kupplungskomponente ist. Falls zwei X-SO₂-Reaktivreste vorhanden sind, so sind diese insbesondere an den Rest der Diazokomponente gebunden; und für den Fall, dass das Farbstoffmolekül zwei 2,4,5-Trichlorpyrimidylreste enthält, befinden sich diese vorzugsweise in der Kupplungskomponente. Es sind somit, entsprechend den Indizes, welche den Reaktivresten in Formel (1) angefügt sind, auch tri- und tetrareaktive Farbstoffe in Betracht zu ziehen. Die obigen Erläuterungen gelten sinngemäss auch für Disazofarbstoffe und Metallkomplexazofarbstoffe.

In Betracht zu ziehen sind ferner auch Reaktivfarbstoffe der Formel (1) worin einer der Reaktivreste oder beide über einen Rest der Formel 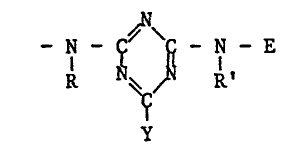
an den Chromophor gebunden sind. Dabei ist der Rest X-S02 bzw. der 2,4,5-Trichlorpyrimidylaminorest an E gebunden; E ist ein gegebenenfalls substituiertes aliphatisches oder aromatisches Brückenglied. Das Brückenglied E ist vorzugsweise ein Alkylen- oder Arylenrest. So kann E ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Aethylen, Propylen, Butylen, Hexylen oder Cyclohexylen. Als Arylenrest ist E z.B. ein Naphthylenrest, der Rest eines Diphenyls oder Stilbens oder insbesondere ein Phenylenrest. Der Rest E kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. R und R' sind unabhängig voneinander Wasserstoff oder ein gegebenenfalls substituierter C₁₋₄-Alkylrest; und Y ist ein Halogenatom, eine gegebenenfalls substituierte Aminogruppe, Hydroxy, eine Alkoxy-,Aryloxy-, Alkylthio- oder Arylthiogruppe.

Vom Gegenstand der Erfindung ausgenommen ist der Reaktivfarbstoff des Beispiels 38 der Japanischen Offenlegungsschrift 57-57754. Es handelt sich um einen Disazofarbstoff der Formel

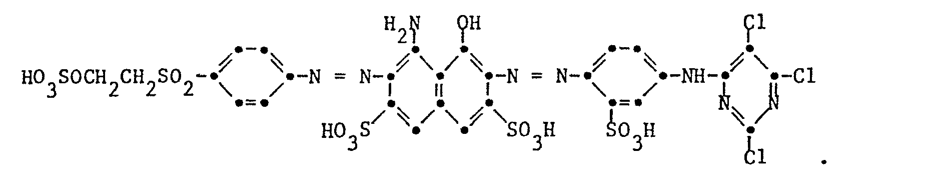

Bevorzugt sind:
Reaktivfarbstoffe der Formel 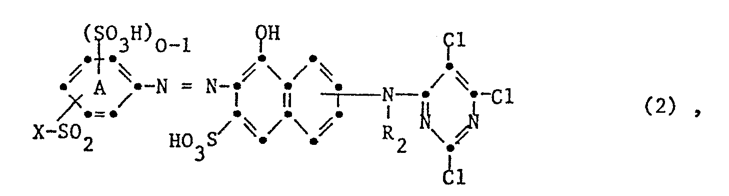
   worin R₂Wasserstoff, Methyl oder Aethyl ist, X die unter Formel (1) angegebene Bedeutung hat, und der Benzolring A gegebenenfalls weitersubstituiert ist;
Reaktivfarbstoffe der Formel 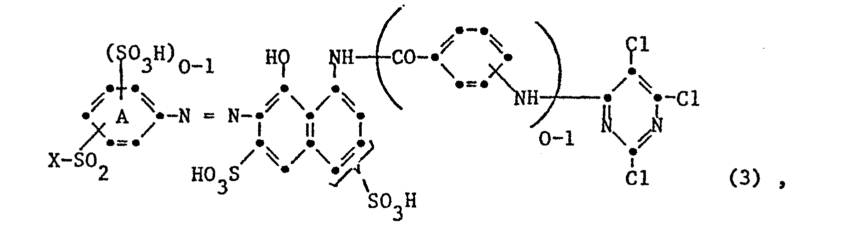
   worin X die unter Formel (1) angegebene Bedeutung hat, und der Benzolring A gegebenenfalls weitersubstituiert ist;
Reaktivfarbstoffe der Formel 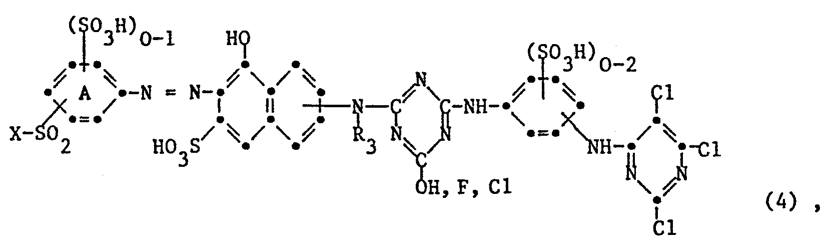
   worin R₃ Wasserstoff, Methyl oder Aethyl ist, X die unter Formel (1) angegebene Bedeutung hat, und der Benzolring A gegebenenfalls weitersubstituiert ist;
Reaktivfarbstoffe der Formel 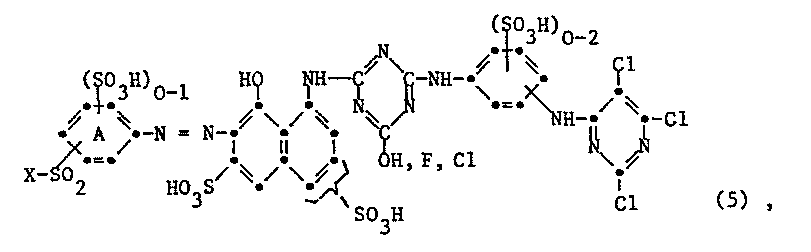
   worin X die unter Formel (1) angegebene Bedeutung hat, und der Benzolring A gegebenenfalls weitersubstituiert ist;
Reaktivfarbstoffe der Formel 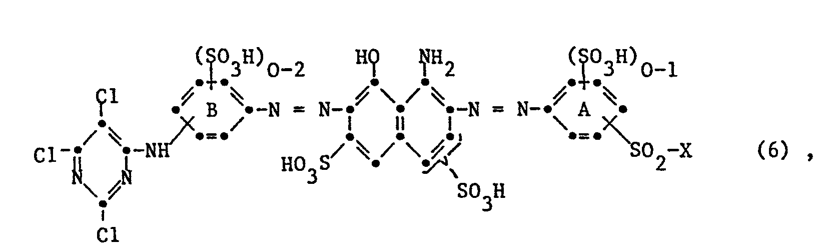
   worin X die unter Formel (1) angegebene Bedeutung hat, und die Benzolringe A und B unabhängig voneinander gegebenenfalls weitersubstituiert sind, wobei die unter Formel (1) angegebene Einschränkung gilt;
Reaktivfarbstoffe der Formel 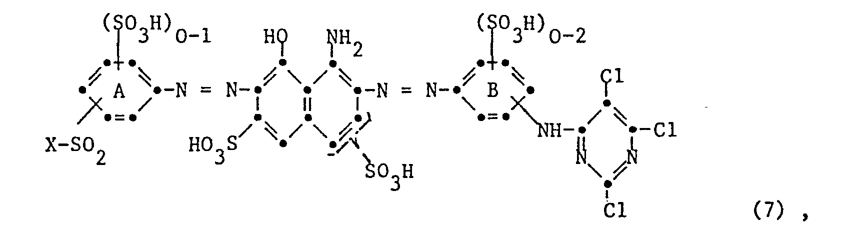
   worin X die unter Formel (1) angegebene Bedeutung hat, und die Benzolringe A und B unabhängig voneinander gegebenenfalls weitersubstituiert sind.

Bevorzugt sind weiterhin Reaktivfarbstoffe der Formeln (2) bis (7), worin die Benzolringe A bzw. B nicht weitersubstituiert sind, und/oder worin X die Vinyl- oder β-Sulfatoäthyl-Gruppe ist.

Das Verfahren zur Herstellung der Reaktivfarbstoffe der Formel (1) ist dadurch gekennzeichnet, dass man Farbstoffe der Formel 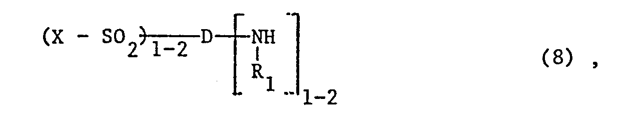
worin D, R₁ und X die unter Formel (1) angegebenen Bedeutungen haben, oder ihre Vorprodukte mit 2,4,5,6-Tetrachlorpyrimidin zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

Man geht somit von Farbstoffen aus, die eine X-SO₂-Gruppe bereits enthalten, und acyliert die Gruppe -N(R₁)H mit 2,4,5,6-Tetrachlorpyrimidin; oder man verwendet entsprechende Vorprodukte, z.B. eine Diazokomponente der Formel

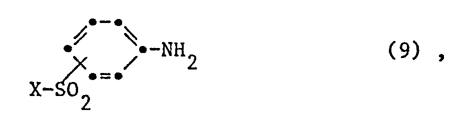

und kuppelt diese auf eine Kupplungskomponente, welche eine Gruppe -N(R₁)H enthält, und acyliert die Gruppe -N(R₁)H vor oder nach der Kupplung mit 2,4,5,6-Tetrachlorpyrimidin. Bei der oben beschriebenen Ausführungsform kann die acylierbare Gruppe -N(R₁)H auch in der Diazokomponente vorhanden sein, und dementsprechend die X-SO₂-Gruppe in der Kupplungskomponente. Man verwendet in diesem Falle als Diazokomponenten vor allem die l,3-Phenylendiamin-4-sulfonsäure, l,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw- Nitrogruppe vor der Kondensation mit dem 2,4,5,6-Tetrachlorpyrimidin durch Verseifen bzw. Reduzieren in die H₂N-Gruppe übergeführt wird. Die Stellung der Reaktivreste im fertigen Azofarbstoff ist somit nicht unveränderlich an bestimmte Ausgangskomponenten - Diazo- oder Kupplungskomponenten - gebunden. Der X-S0₂-Rest und der 2,4,5-Trichlorpyrimidylrest können, beispielsweise bei Disazofarbstoffen vom Typus 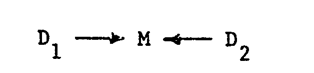
auch an je eine Diazokomponente gebunden sein.

Ferner können die beiden Reaktivreste auch an ein und dieselbe Komponente gebunden sein, beispielsweise indem man eine nichtfaserreaktive Diazokomponente sowie eine Kupplungskomponente der Formel 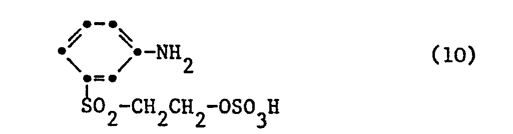
verwendet, und die -NH Gruppe nach der Kupplung mit 2,4,5,6-Tetrachlorpyrimidin acyliert.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffes ist. Beispiel für derartige, aus zwei oder mehr als zwei Komponenten zusammengesetzte Farbstoffe sind: Monoazo-, Disazo-, Trisazo-, Metallkomplexazo-, Formazan- und Azomethinfarbstoffe. Bei der Herstellung der Endfarbstoffe aus Vorprodukten handelt es sich meistens um Kupplungen, die zu Azofarbstoffen führen.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Eine andere vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff der Formel (8), worin X ein Rest HO-CH₂CH₂- ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin X die Vinylgruppe H₂C=CH- ist, und lagert an das Zwischenprodukt Thioschwefelsäure an, wobei ein Rest HO₃SS-CH₂CH ₂- entsteht. Die Sulfatierung der Hydroxygruppe in einem Farbstoff der Formel (8) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit 2 Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen unter alkalischen Bedingungen abspaltbaren Restes für X in eine Verbindung der Formel (1) oder ein Zwischenprodukt anstelle der Sulfatogruppe, beispielsweise einer Thiosulfatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit säureabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Liegen in den hergestellten Reaktivfarbstoffen zur Metallkomplexbildung befähigte Gruppen vor, können die Reaktivfarbstoffe auch nachträglich metallisiert werden.

Da die einzalnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse des 2,4,5-Trichlorpyrimidylrestes eintritt, muss ein Zwischenprodukt, welches Acetylaminogruppen enthält, zwecks Abspaltung der Acetylgruppen verseift werden, bevor mit einem 2,4,5,6-Tetrachlorpyrimidin kondensiert wird. Welche Teilreaktion zweckmässigerweise zuerst ausgeführt wird, ist von Fall zu Fall verschieden und richtet sich vor allem nach der Löslichkeit der beteiligten Aminoverbindungen und der Basizität der zu acylierenden Aminogruppen. Die Acylierung der Farbstoffe der Formel (8) oder der Farbstoffvorprodukte mit 2,4,5,6-Tetrachlorpyrimidin erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden könnnen, einzeln genannt werden.

Als Farbstoffe der Formel (8) kommen besonders Farbstoffe der folgenden Strukturtypen in Betracht:

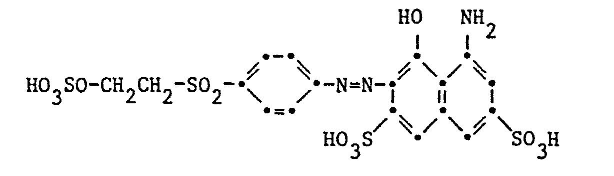

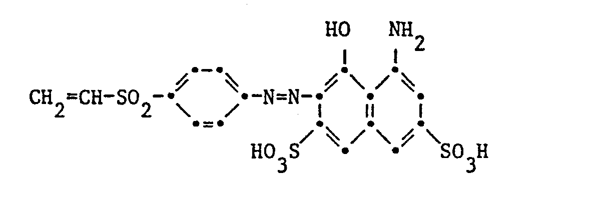

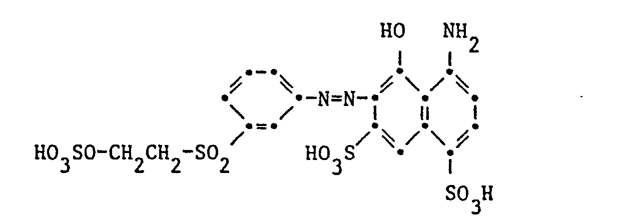

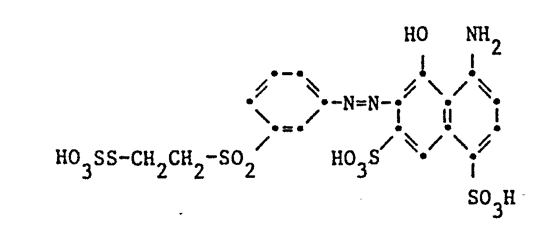

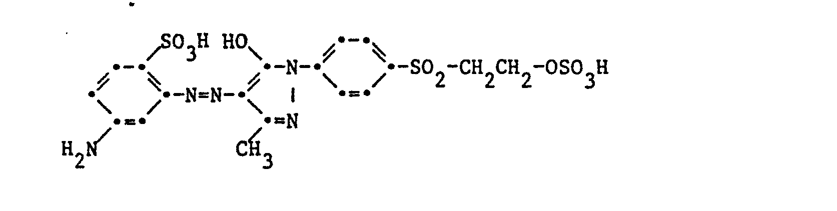

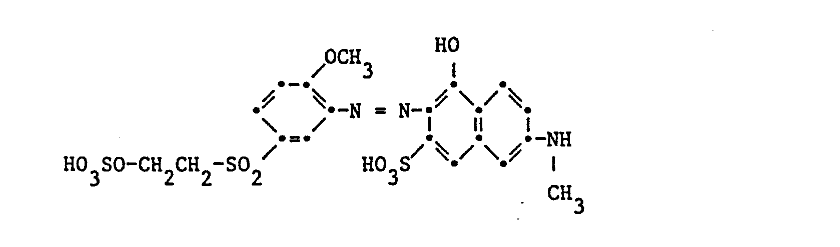

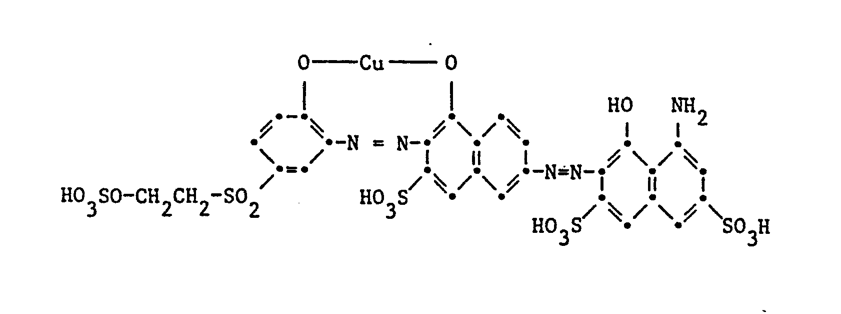

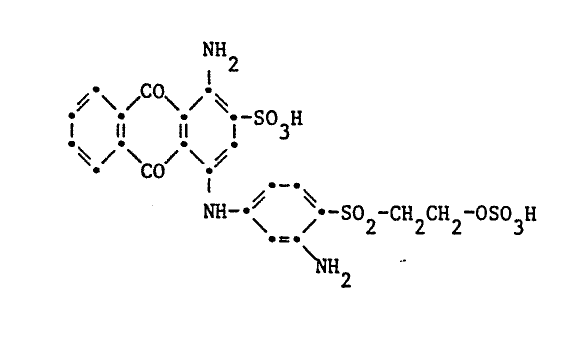

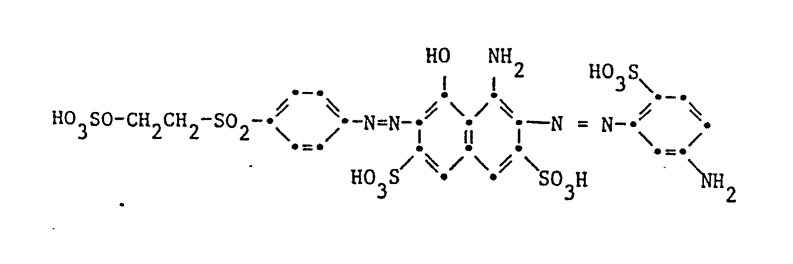

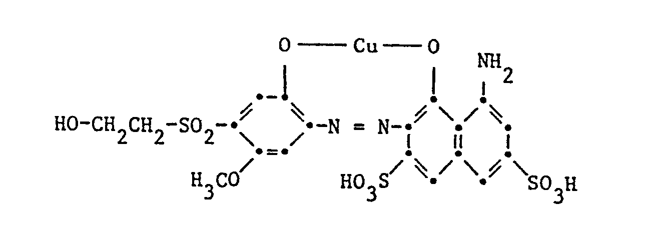

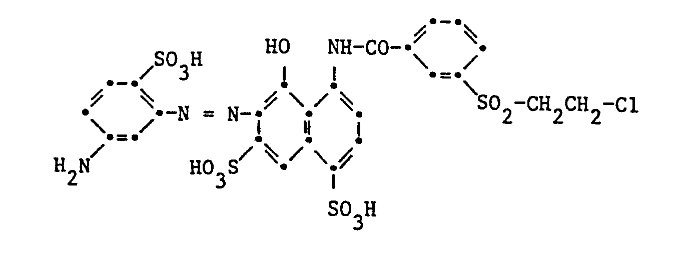

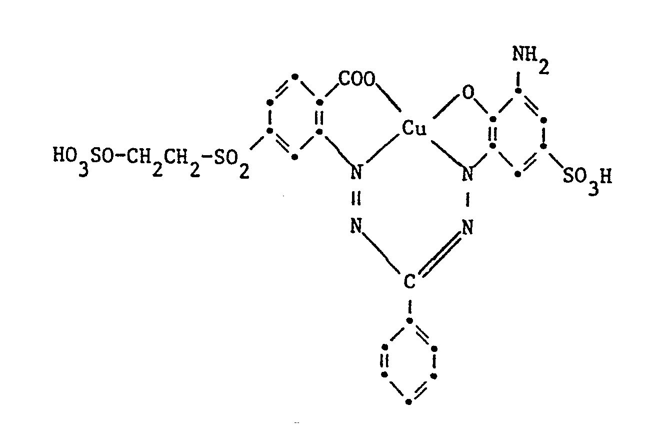

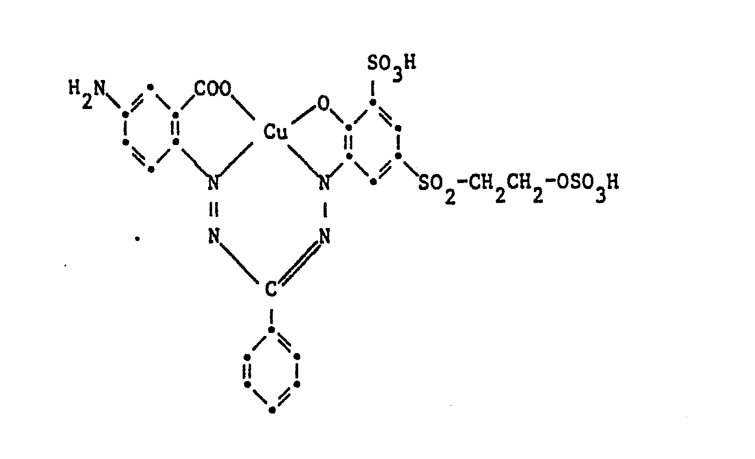

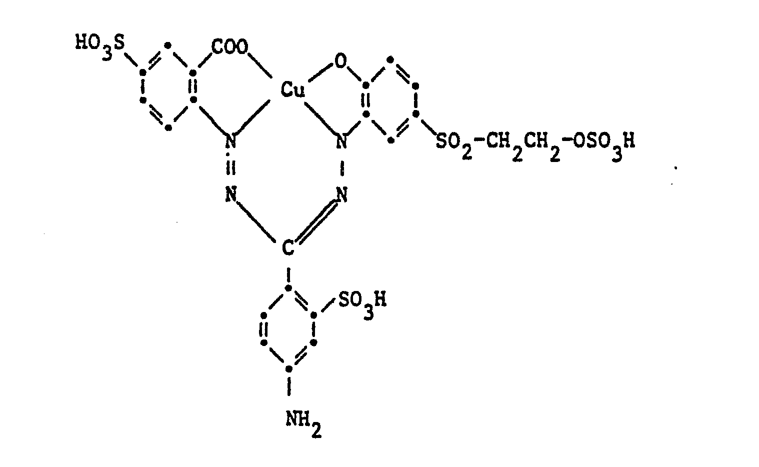

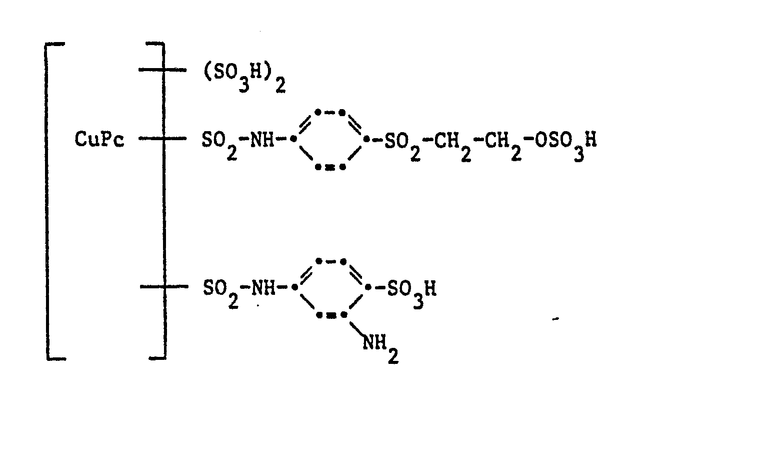

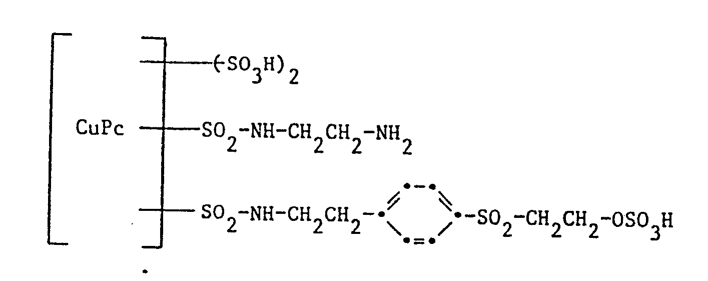

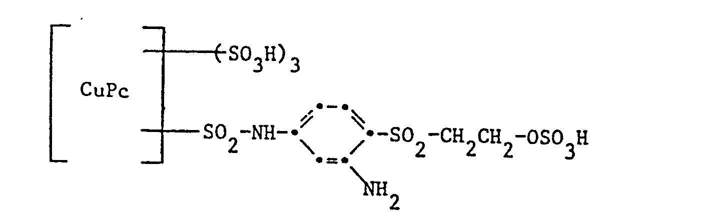

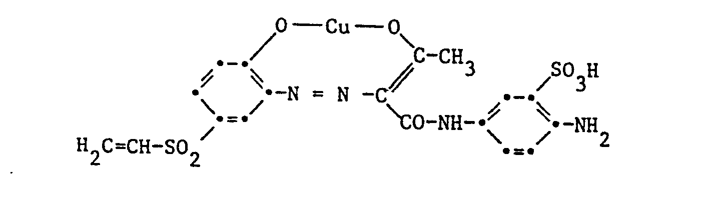

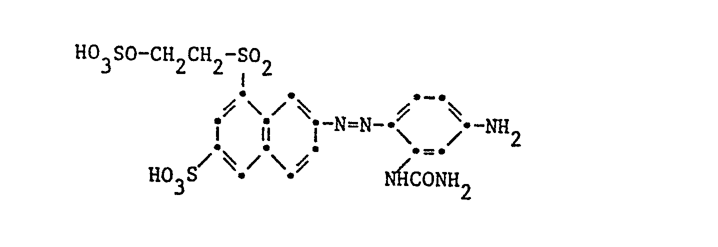

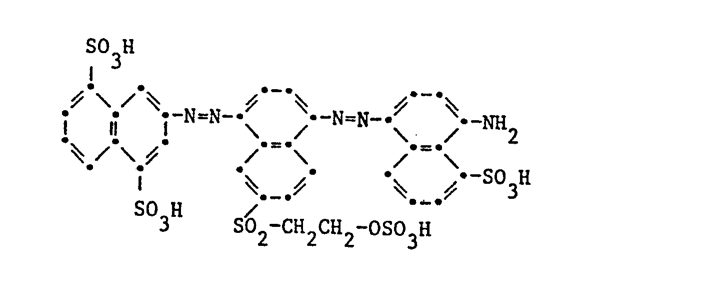

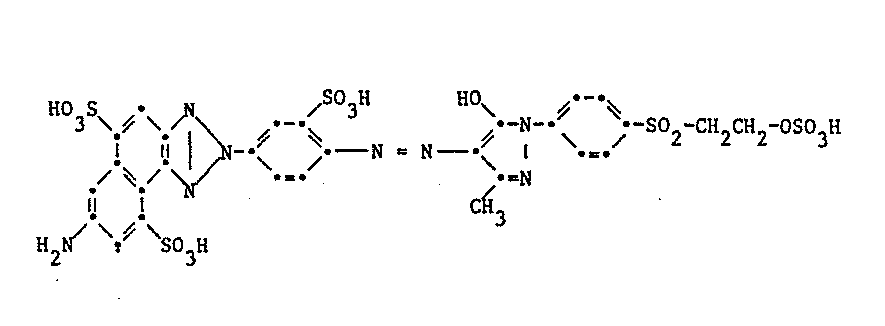

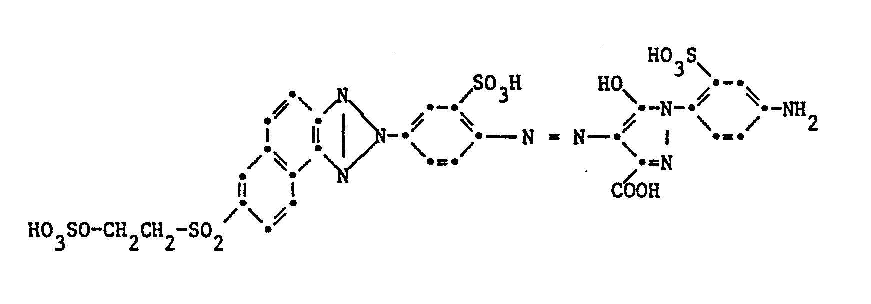

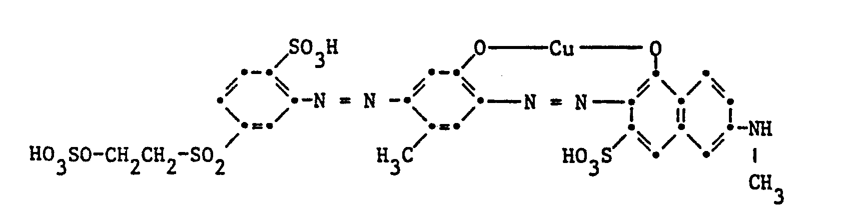

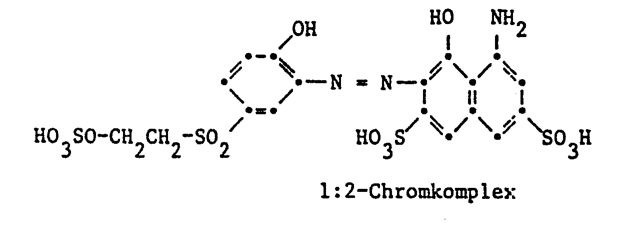

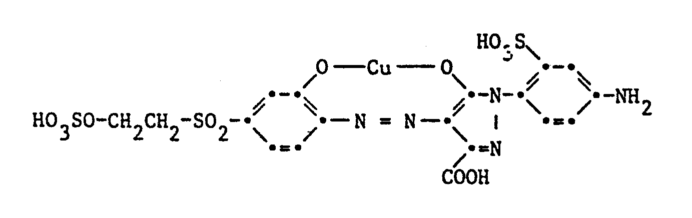

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, muss eine der beiden Komponenten mindestens eine acylierbare Aminogruppe und die andere mindestens eine Gruppe X-S02 aufweisen. Als Diazokomponenten kommen vorwiegend geeignete Verbindungen aus der Aminobenzol- und Aminonaphthalinreihe in Betracht, beispielsweise solche, die in den Azofarbstoffen der oben angegebenen Formeln enthalten sind, wie 1,3-Diaminobenzol, 1,4-Diaminobenzol, l,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, l,4-Diamino-2,5-diäthylbenzol, 1,4-Di- amino-2-methyl-5-methoxybenzol, 1,4-Diamino-2,5-dimethoxybenzol, 1,4-Diamino-2,5-diäthoxybenzol, 2,6-Diaminonaphthalin, l,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenyl- harnstoff-2,2'-disulfonsäure, 4,4'-Diaminodiphenyloxyäthan-2,2'-disulfonsäure, 4,4'-Diaminostilben-2,2'-disulfonsaure, 4,4'-Diaminodiphenyl- äthan-2,2'-disulfonsäure, 2-Amino-5-aminomethylnaphthalin-l-sulfonsäure, 2-Amino-5-aminomethylnaphthalin-1,7-disulfonsäure, 1-Amino-4-methoxy-5-aminomethylbenzol-6-sulfonsäure, 1,3,5-Triaminobenzol.

Aromatische Amine, die als Diazokomponenten zur Herstellung der Mono-oder Disazofarbstoffe dienen können, und die eine Gruppe der Formel X-S0₂- ein- oder zweimal gebunden enthalten, sind z.B.:
1-Amino-4-ß-sulfatoäthylsulfonylbenzol, 1-Amino-4-ß-thiosulfatoäthyl- sulfonylbenzol, 1-Amino-4-vinylsulfonylbenzol, 1-Amino-4-ß-chloräthyl- sulfonylbenzol, 1-Amino-3-ß-sulfatoäthylsulfonylbenzol, 1-Amino-3-vinyl- sulfonylbenzol, 1-Amino-2-methoxy-5-ß-sulfatoäthylsulfonylbenzol, 1-Amino-2-methoxy-5-ß-thiosulfatoäthylsulfonylbenzol, 1-Amino-2-methoxy-5-vinylsulfonylbenzol, 1-Amino-4-methoxy-3-ß-sulfatoäthylsulfonylbenzol, 1-Amino-4-methoxy-3-ß-vinylsulfonylbenzol, 1-Amino-2,5-dimethoxy-4-ß- sulfatoäthylsulfonylbenzol, l-Amino-2,5-dimethoxy-4-vinylsulfonylbenzol, 1-Amino-2-methoxy-4-ß-sulfatoäthylsulfonyl-5-methylbenzol, 1-Amino-2-methoxy-4-vinylsulfonyl-5-methylbenzol, 1-Amino-3-ß-sulfatoäthylsulfonyl-6-carboxybenzol, 1-Amino-3-vinylsulfonyl-6-carboxybenzol, 1-Amino-4-ß- sulfatoäthylsulfonylbenzol-2-sulfonsäure, l-Amino-4-vinylsulfonylbenzol-2-sulfonsäure, 1-Amino-5-vinylsulfonylbenzol-2,4-disulfonsäure, 1-Amino-2-hydroxy-5-ß-sulfatoäthylsulfonylbenzol, 1-Amino-2-hydroxy-4-ß-sulfato- äthylsulfonylbenzol, 1-Amino-2-hydroxy-5-ß-sulfatoäthylsulfonylbenzol-3-sulfonsäure, 1-Amino-2-brom-4-ß-sulfatoäthylsulfonylbenzol, 1-Amino-2,6-dichlor-4-ß-sulfatoäthylsulfonylbenzol, 1-Amino-2,4-di-(ß-sulfatoäthyl- sulfonyl)-benzol, 1-Amino-2,4-di-(ß-sulfatoäthylsulfonyl)-5-chlorbenzol, l-Amino-2,4-di-(ß-thiosulfatoäthylsulfonyl)-5-chlorbenzol, 1-Amino-2,4-di-(vinylsulfonyl)-benzol, 1-Amino-2,4-di-(vinylsulfonyl)-5-chlorbenzol, 1-Amino-2,4-di-(ß₋acetoxyäthylsulfonyl)-benzol, 1-Amino-2,4-di-(ß-acetoxy- äthylsulfonyl)-5-chlorbenzol, 2-Amino-8-ß-sulfatoäthylsulfonylnaphthalin, 2-Amino-6-ß-sulfatoäthylsulfonylnaphthalin, 2-Amino-6ß-sulfatoäthylsulfonyl- naphthalin-l-sulfonsäure, 2-Amino-8-ß-sulfatoäthylsulfonylnaphthalin-6-sulfonsäure, 2-Amino-6,8-di-(ß-sulfatoäthylsulfonyl)-naphthalin.

Ferner sind zu erwähnen die entsprechenden β-Hydroxy-verbindungen, welche als Vorprodukte verwendet werden können, z.B.: l-Amino-4-ß-hydroxyäthyl- sulfonylbenzol, 1-Amino-3-ß-hydroxyäthylsulfonylbenzol, 1-Amino-2,4-di-(ß-hydroxyäthylsulfonyl)-benzol und l-Amino-2,4-di-(ß-hydroxyäthylsulfonyl)-5-chlorbenzol.

Wenn als Diazokomponente statt eines Diamins eine Amino-acetylamino-verbindung eingesetzt werden soll, aus welcher nachträglich die Acetylgruppe durch Verseifen wieder abgespalten wird, wie dies oben bei der Erläuterung des Verfahrens erwähnt ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Die Kupplungskomponenten sind vor allem geeignete Verbindungen der Aminobenzol- und Naphthalinreihe, z.B. Aniline, N-mono-substituierte Aniline, m-Phenylendiaminderivate, Aminonaphthaline, Naphthole, Aminonaphthalinsulfonsäure, Naphtholsulfonsäuren oder Aminonaphtholsulfonsäuren, ferner Pyrazolone, Aminopyrazole, Aminopyridine, Hydroxypyridine/pyridone, Aminopyrimidine, Hydroxypyrimidine, Indole, Barbitursäurederivate oder Acetoacetarylide. Als Beispiele seien genannt:
1-Amino-3-methylbenzol, 1-Amino-2-methoxy-5-methylbenzol, 1-Amino-2,5-dimethylbenzol, 3-Aminophenylharnstoff, l-Amino-3-acetylaminobenzol, l-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 2-Amino-5-hydroxynaphthalin-7-sulfonsäure, 2-Methyl- bzw. 2-Aethylamino-5-hydroxynaphthalin-7-sulfonsäure, 2-Amino-5-hydroxynaphthalin-l,7-disulfonsäure, 2-Amino-8-hydroxynaphthalin-6-sulfonsäure, 2-Methyl- bzw. 2-Aethylamino-8-hydroxynaphthalin-6-sulfonsäure, 2-Amino-8-hydroxynaphthalin-3,6-disulfonsäure, 1-Amino-5-hydroxynaphthalin-7-sulfonsäure, 1-Amino-8-hydroxynapthalin-3,6- bzw. -4,6-disulfonsäure, 1-(4'-Aminobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-ß-Aminoäthyl-3-cyan-4-methyl-6-hydroxypyridon-(2), 1-y-Aminopropyl-3-sulfomethyl-4-methyl-6-hydroxypyridon-(2), 1,3-Diaminobenzol, 1-Amino-3-(N,N-di-ß-hydroxyäthylamino)-benzol, 1-Amino-3-(N,N-di-ß-sulfatoäthyl- amino)-benzol, 1-Amino-3-(N,N-di-ß-hydroxyäthylamino)-4-methoxy-benzol, 1-Amino-3-(N,N-di-ß-sulfatoäthylamino)-4-methoxybenzol, 1-Amino-3-sulfo- benzylaminobenzol, 1-Amino-3-sulfo-benzylamino-4-chlorbenzol, 1-Amino-3-(N,N-di-sulfo-benzylamino)-benzol, 1-(3'-Aminophenyl)-3-methyl-5-pyrazolon sowie 1-(Aminophenyl)-3-carboxy-5-pyrazolone, die im Phenylkern durch Chlor, Methyl, Methoxy, Nitro oder Sulfo substituiert sein können, wie 1-(2'-Sulfo-4'-aminophenyl)-3-carboxy-pyrazolon-(5).

Falls eine der beiden Komponenten beide Reaktivgruppen zugleich enthält, oder diese in die betreffende Komponente eingeführt werden können, wie bei den Kupplungskomponenten der Formeln 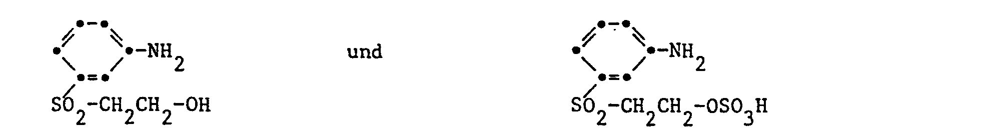
kann die andere Komponente, in diesem Falle die Diazokomponente, auch nichtreaktiv sein, Beispiele sind:
Aminobenzol, 1-Amino-2-, -3- oder -4-methylbenzol, 1-Amino-2-, -3- oder -4-methoxybenzol, l-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 2-Aminodiphenyläther, 1-Aminobenzol-2-, -3- oder -4-sulfonsäureamid, 1-Aminobenzol-2-, -3- oder -4-carbonsäure, Dehydrothio-p-toluidin-sulfonsäure, 1-Amino-3-trifluor- methylbenzol-6-sulfonsäure, 1-Aminobenzol-2-, -3- oder -4-sulfonsäure, 1-Aminobenzol-2,4- und -2,5-disulfonsäure, 1-Amino-4-methylbenzol-2-sulfonsäure, l-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Aniino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-diclilorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4-oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-l-methylbenzol-3,5- disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-l-, -3-, -4-, -5-, -6-, -7- oder -8-sulfonsäure, 2-Aminonaphthalin-3,6- oder -5,7-disulfonsäure, 1-Aminonaphthalin-3,6- oder -5,7- disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, l-Hydroxy-2-aminobenzol-4-sulfonsäure, 1-Hydroxy-2-aminobenzol-5-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, I-Amino-2-hydroxy-6-nitronaphtha- lin-6-sulfonsäure, 2-Amino-l-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Kondensation des 2,4,5,6-Tetrachlorpyrimidins mit den Diazokomponenten oder den Kupplungskomponenten bzw. mit acylierbaren Monoazo- oder Disazo-Zwischenprodukten bzw. mit den aminogruppenhaltigen Farbstoffen der Formel (8) oder deren Vorprodukten erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Chlorwasserstoff laufend durch Zugabe wässriger Alkalihydroxyde, -carbonate oder -bicarbonate neutralisiert.

Die Reaktivfarbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Misctgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

### Beispiel 1

64 Teile 1-Amino-8-naphthol-3,6-disulfonsäure werden in 800 Teilen Wasser unter Zusatz von 30Ziger Natriumhydroxidlösung bei pH 5,0 gelöst. Man erwärmt dann auf 60°C und lässt 45 Teile 2,4,5,6-Tetrachlorpyrimidin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 56 Teile Anilin-4-ß-sulfato- äthylsulfon in 500 Teil Eiswasser suspendiert, mit 45 Teile conc. wässriger Salzsäure angesäuert und mit 40 Volumenteilen einer Sn-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel 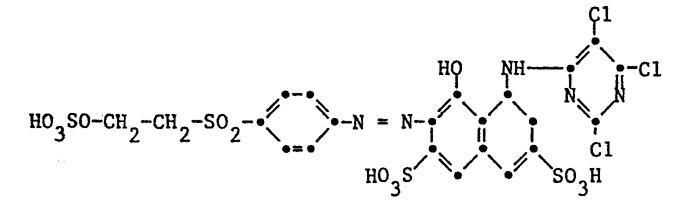
enthält.

Diese Verbindung besitzt sehr gute Farbstoffeigenschaften und färbt Cellulosematerialien nach den üblichen Färbe- und Druckverfahren für Reaktivfarbstoffe in blaustichig roten Tönen mit sehr guten Nassechtheitseigenschaften.

### Beispiel 2

64 Teile 1-Amino-8-naphthol-3,6-disulfonsäure werden in 800 Teilen Wasser unter Zusatz von 30%iger Natriumhydroxidlösung bei pH 5,0 gelöst. Man erwärmt dann auf 60°C und lässt 45 Teile 2,4,5,6-Tetrachlorpyrimidin zutropfen, wobei der pH-Wert durch Eintropfen von 2n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 56 Teile Anilin-3-ß-sulfato- äthylsulfon in 500 Teile Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel 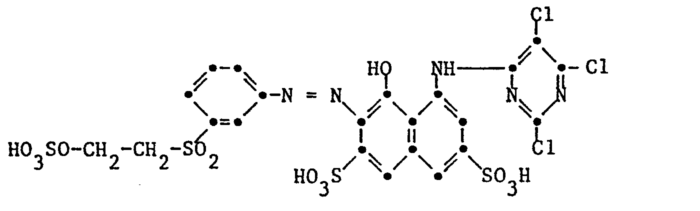
enthält.

Diese Verbindung besitzt sehr gute Farbstoffeigenschaften und färbt Cellulosematerial nach den üblichen Färbe- und Druckverfahren für Reaktivfarbstoffe in blaustichig roten Tönen mit sehr guten Nassechtheitseigenschaften.

### Beispiel 3

64 Teile 1-Amino-8-naphthol-4,6-disulfonsäure werden in 800 Teilen Wasser unter Zusatz von 30%iger Natriumhydroxidlösung bei pH 5,0 gelöst. Man erwärmt dann auf 60°C und lässt 45 Teile 2,4,5,6-Tetrachlorpyrimidin zutropfen, wobei der pH-Wert durch Eintropfen von 5n-Natriumhydroxidlösung bei pH 4,0 bis 4,5 gehalten wird. Es wird 15 Stunden bei pH 4,0 bis 4,5 und 65°C kondensiert.

Die Lösung wird als Kupplungskomponente zur Farbstoffherstellung eingesetzt.

Zur Herstellung der Diazoniumverbindung werden 56 Teile Anilin-4-ß-sulfato- äthylsulfon in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel 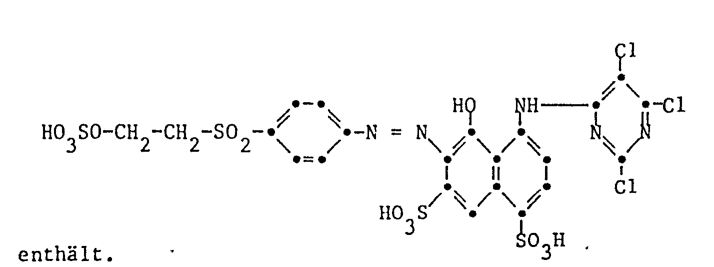
enthält.

Diese Verbindung besitzt sehr gute Farbstoffeigenschaften und färbt Cellulosematerialien nach den üblichen Färbe- und Druckverfahren für Reaktivfarbstoffe in neutralen roten Tönen mit sehr guten Nassechtheitseigenschaften.

### Beispiel 4

48 Teile 2-Amino-5-naphthol-7-sulfonsäure werden in 800 Teilen Wasser unter Zusatz von 30%iger Natriumhydroxidlösung bei pH 4,0 bis 4,5 gelöst. Man erwärmt dann auf 60°C und lässt 45 Teile 2,4,5,6-Tetrachlorpyrimidin zutropfen, wobei der pH-Wert durch Eintropfen von 5n-Natriumhydroxidlösung bei pH 3,0 bis 4,0 gehalten wird. Es wird 20 Stunden bei pH 3,0 bis 3,5 und 60°C kondensiert.

Die Lösung wird als Kupplungskomponente zur Farbstoffherstellung eingesetzt.

Zur Herstellung der Diazoniumverbindung werden 56 Teile Anilin-4-ß-sulfato- äthylsulfon in 500 Teilen Eiswasser suspendiert, mit 45 Teilen conc. wässriger Salzsäure angesäuert und mit 40 Volumenteilen einer 5n-Natriumnitritlösung diazotiert. Man rührt 2 Stunden bei ca. 5°C nach und zerstört dann überschüssige salpetrige Säure mittels Amidosulfonsäure. Die so hergestellte Diazoniumsalzlösung lässt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40°C getrocknet. Nach dem Mahlen wird ein rotes, elektrolythaltiges Farbstoffpulver erhalten, das das Natriumsalz der Verbindung der Formel 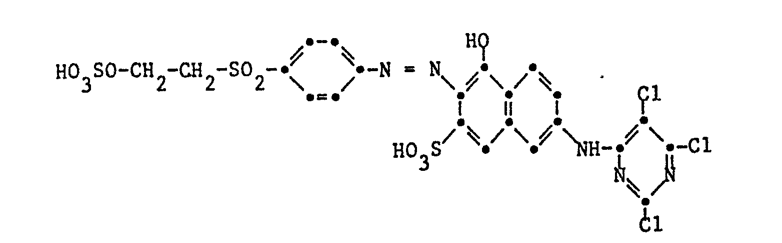
enthält.

Diese Verbindung besitzt sehr gute Farbstoffeigenschaften und färbt Cellulosematerialien nach den üblichen Färbe- und Druckverfahren für Reaktivfarbstoffe in orangen Tönen mit sehr guten Nassechtheitseigenschaften.

Analog zu den beschriebenen Methoden lassen sich auch die in der folgenden Tabelle aufgeführten Farbstoffe herstellen, die Baumwolle im angegebenen Farbton färben.

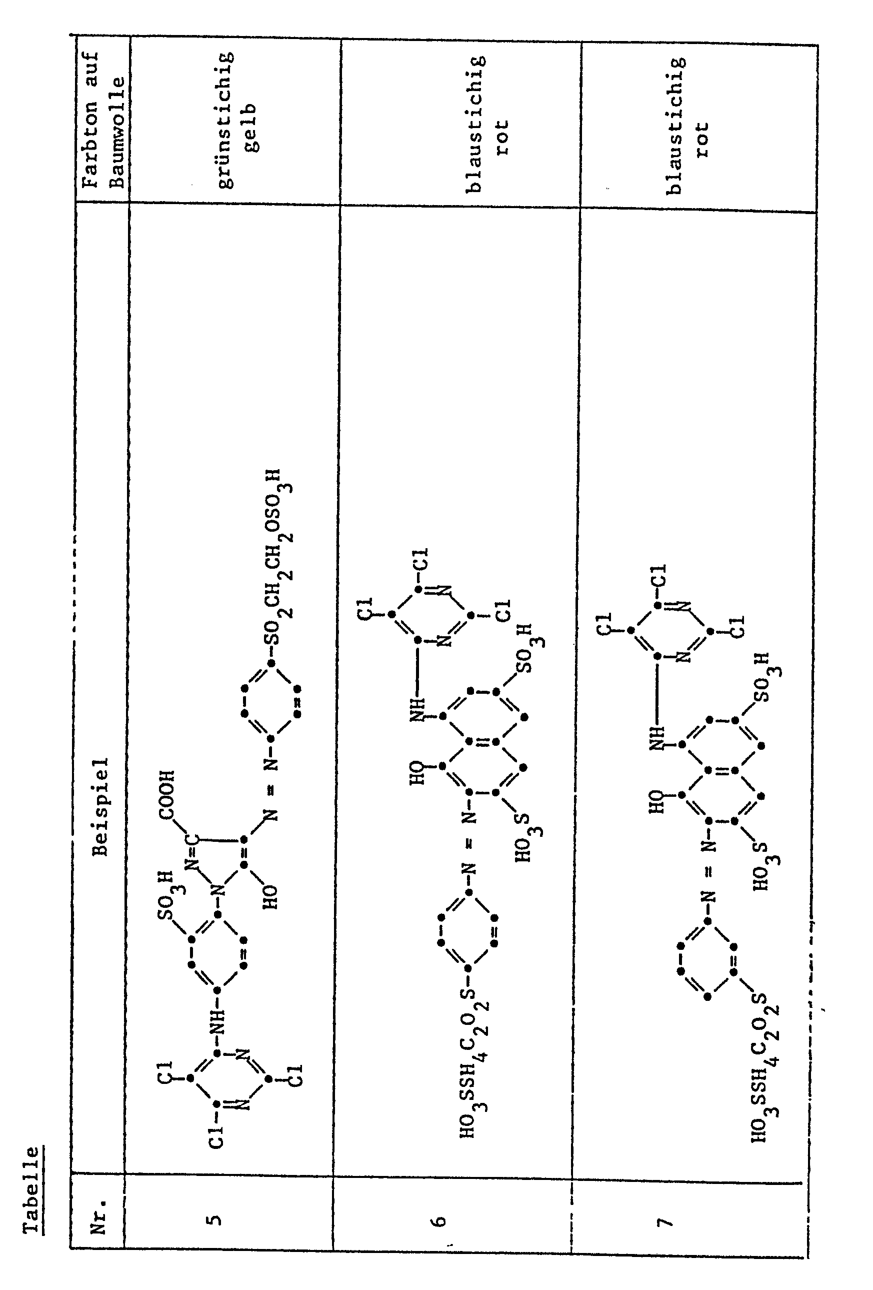

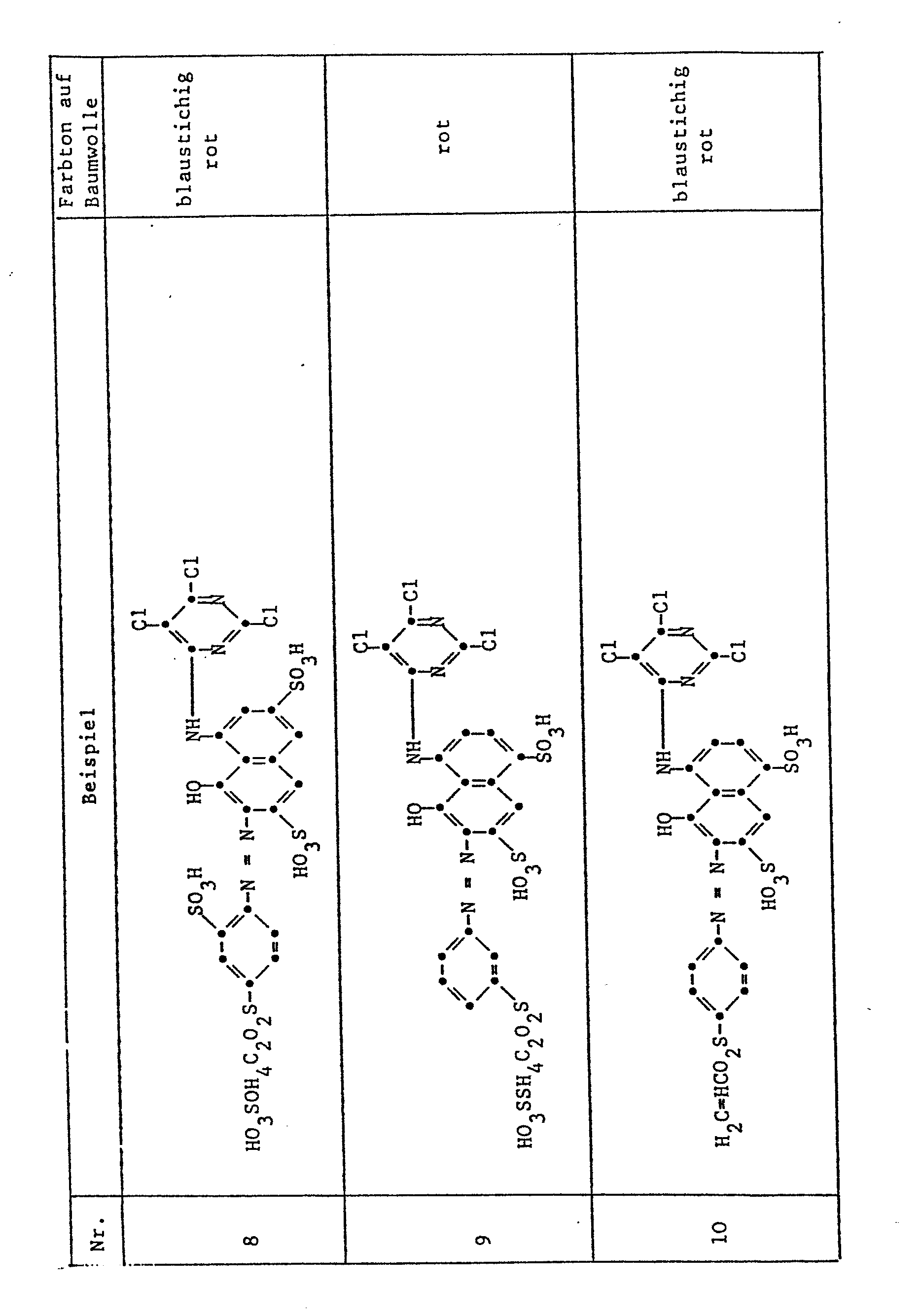

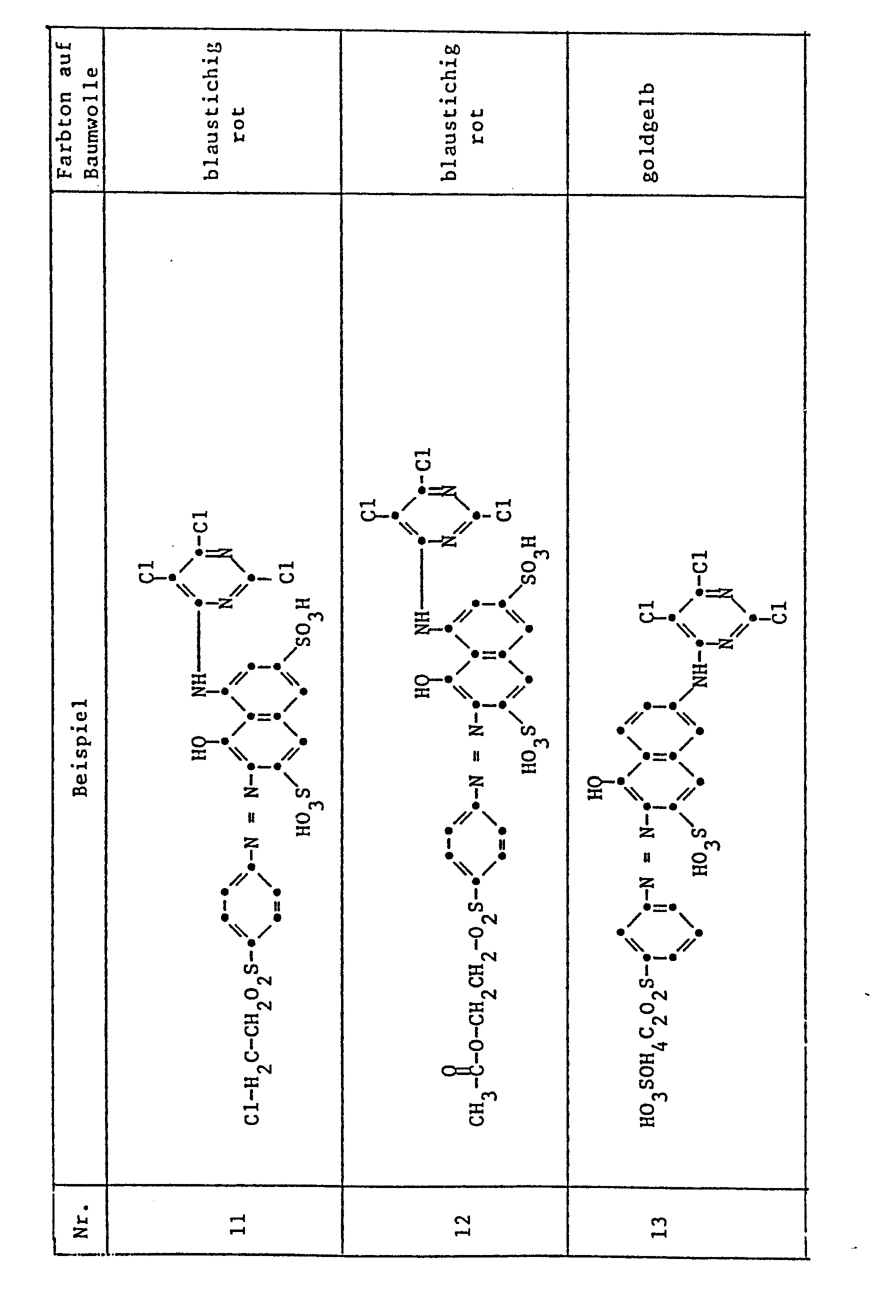

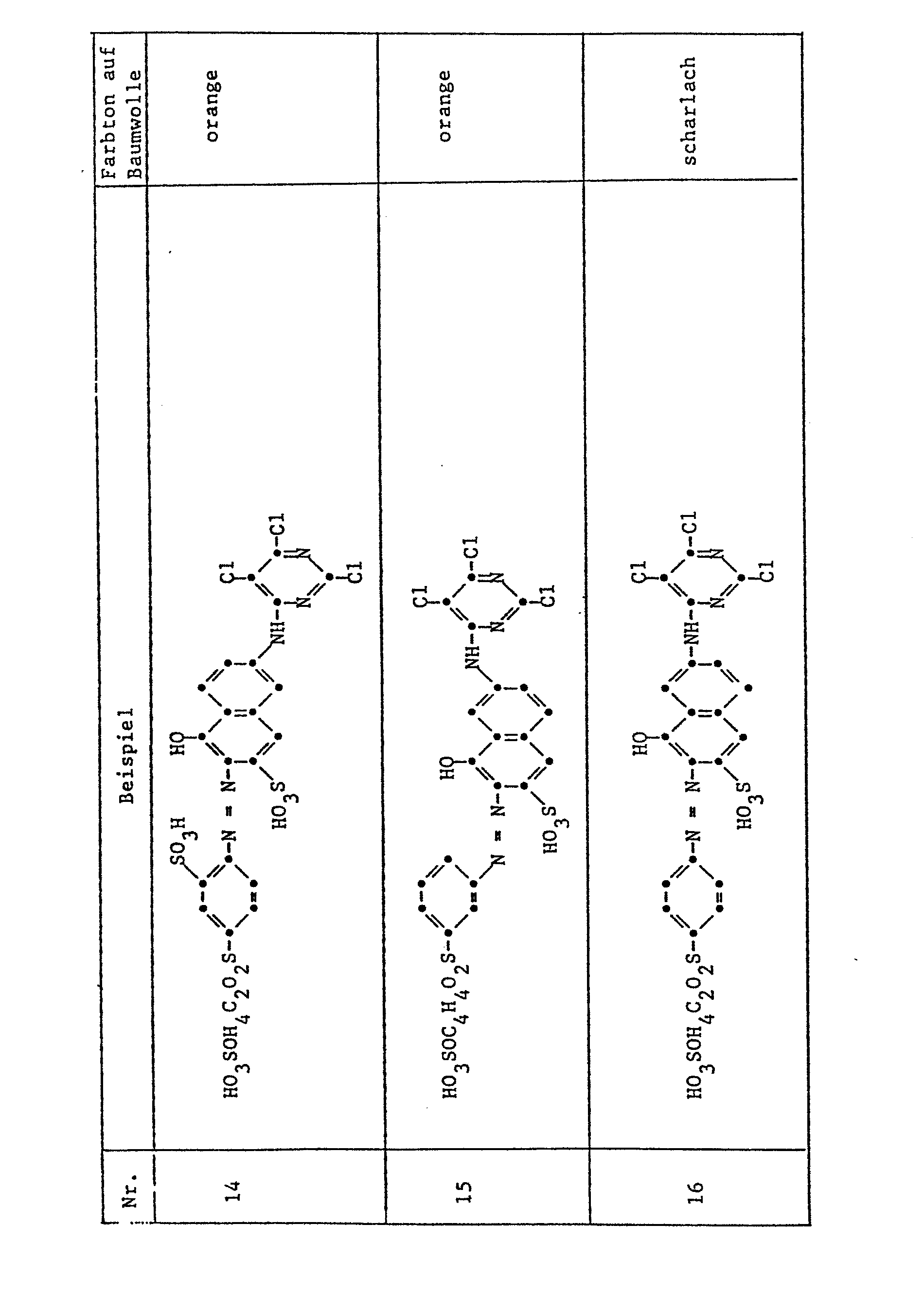

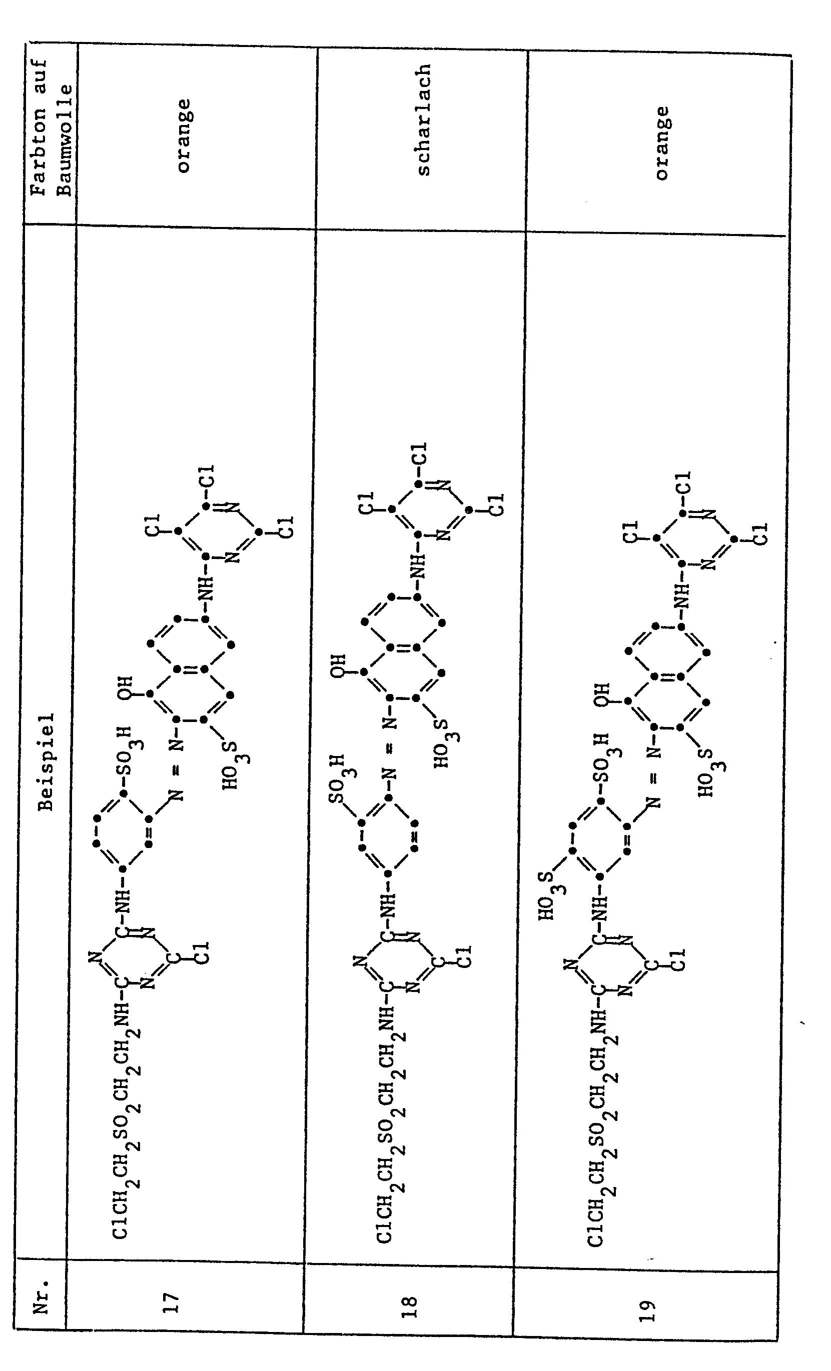

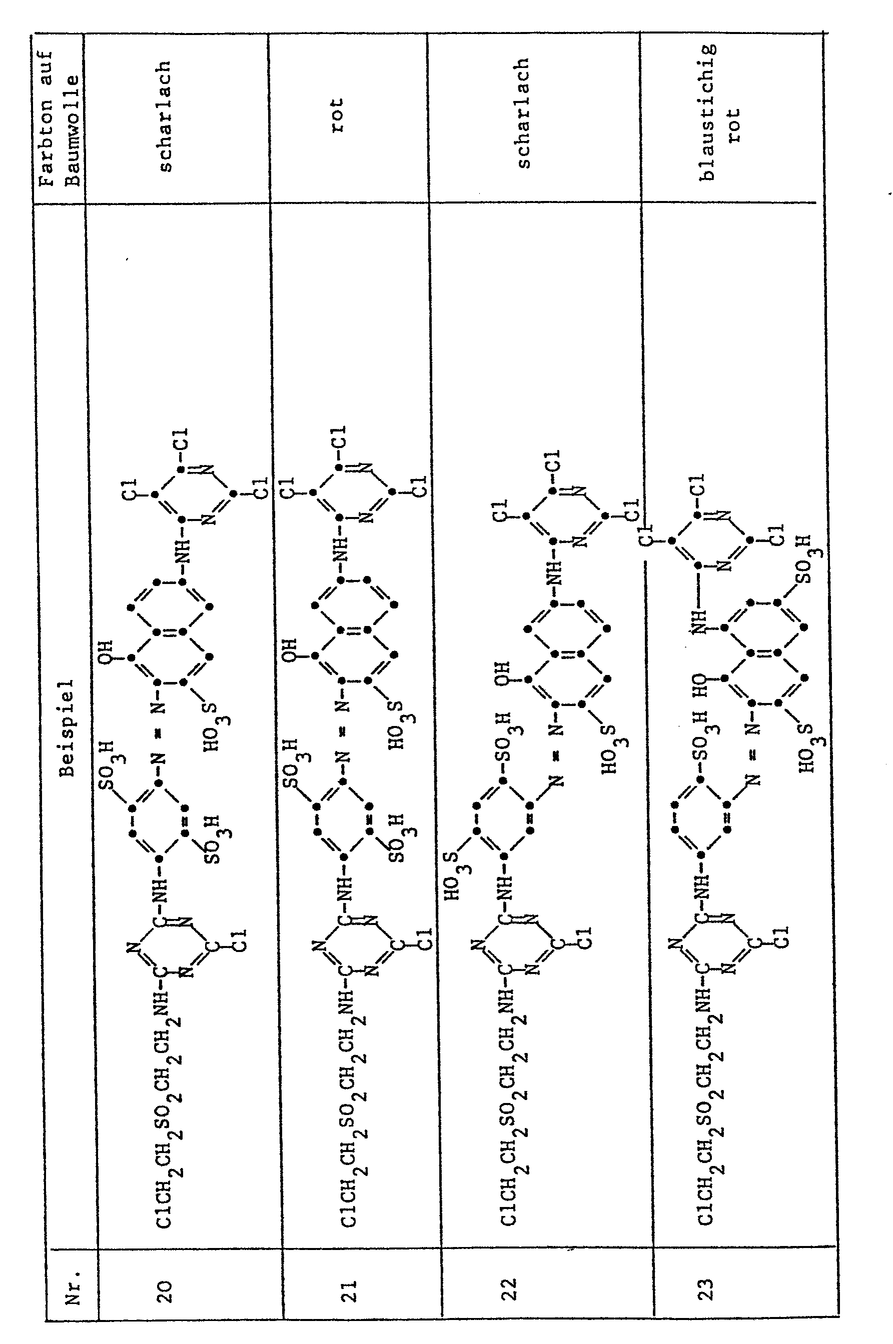

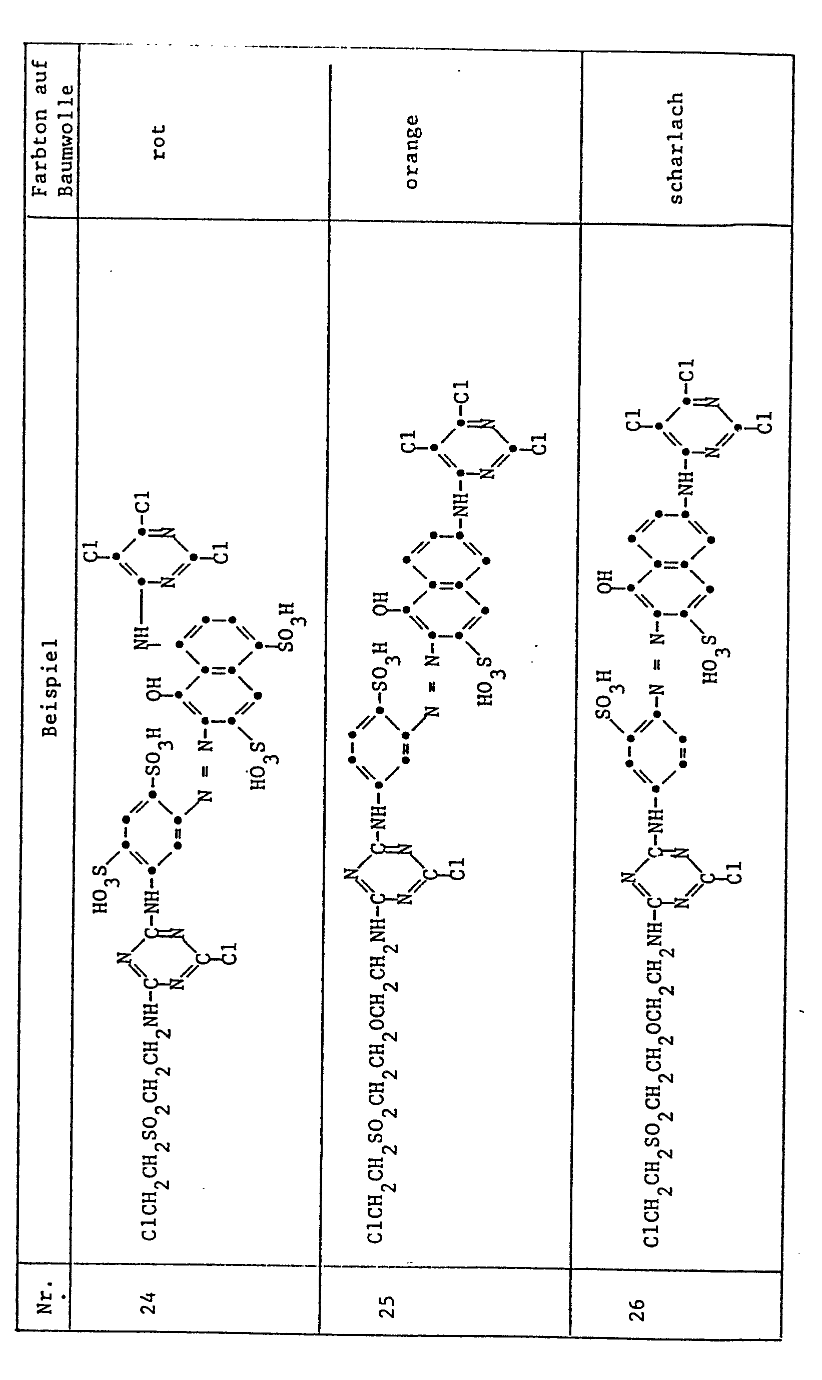

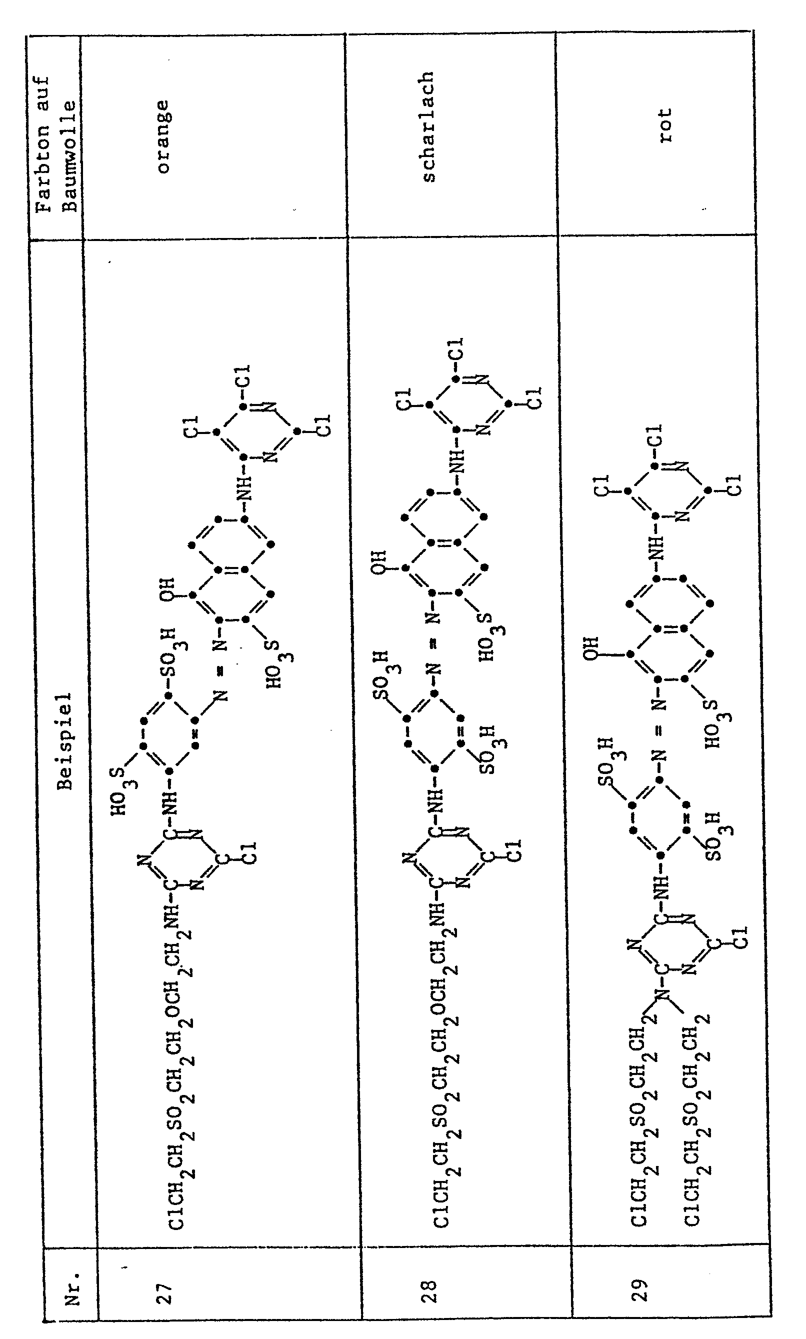

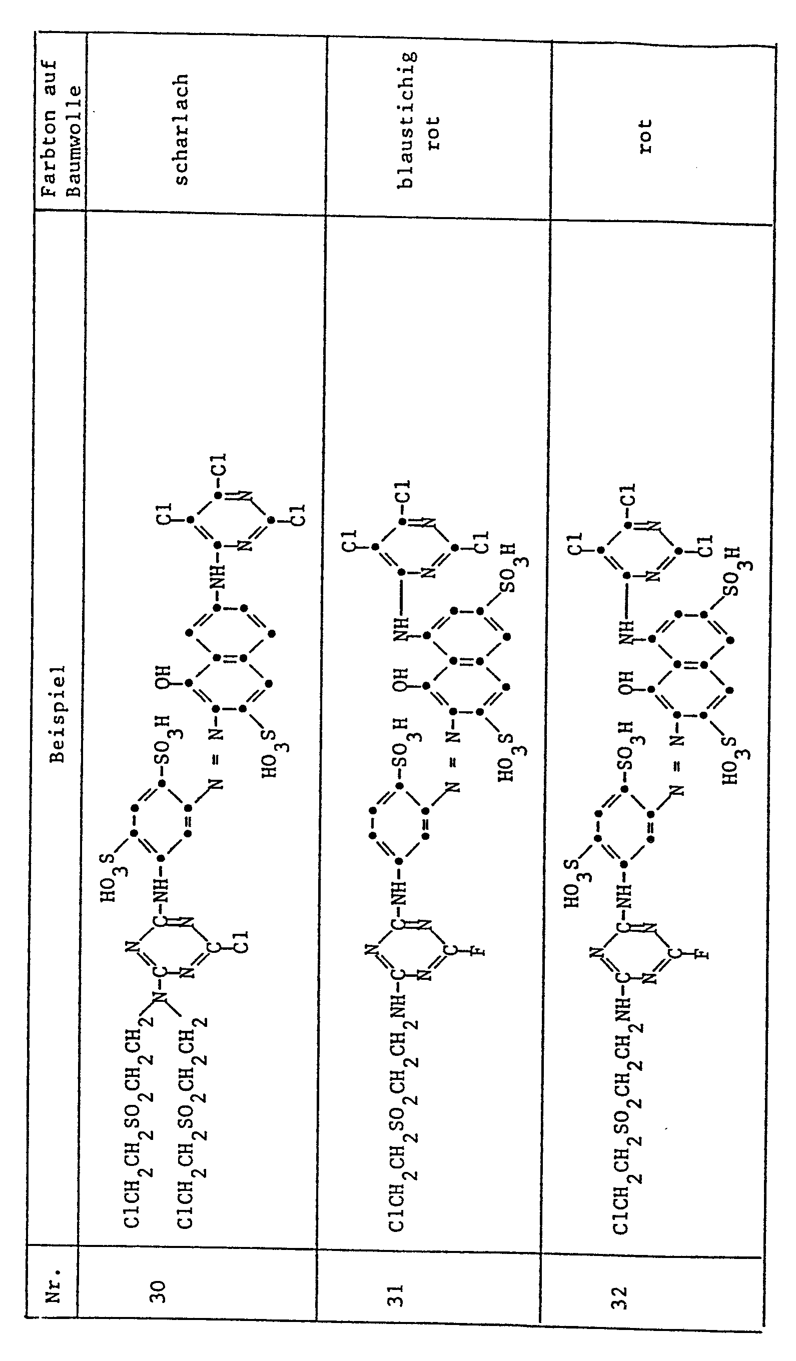

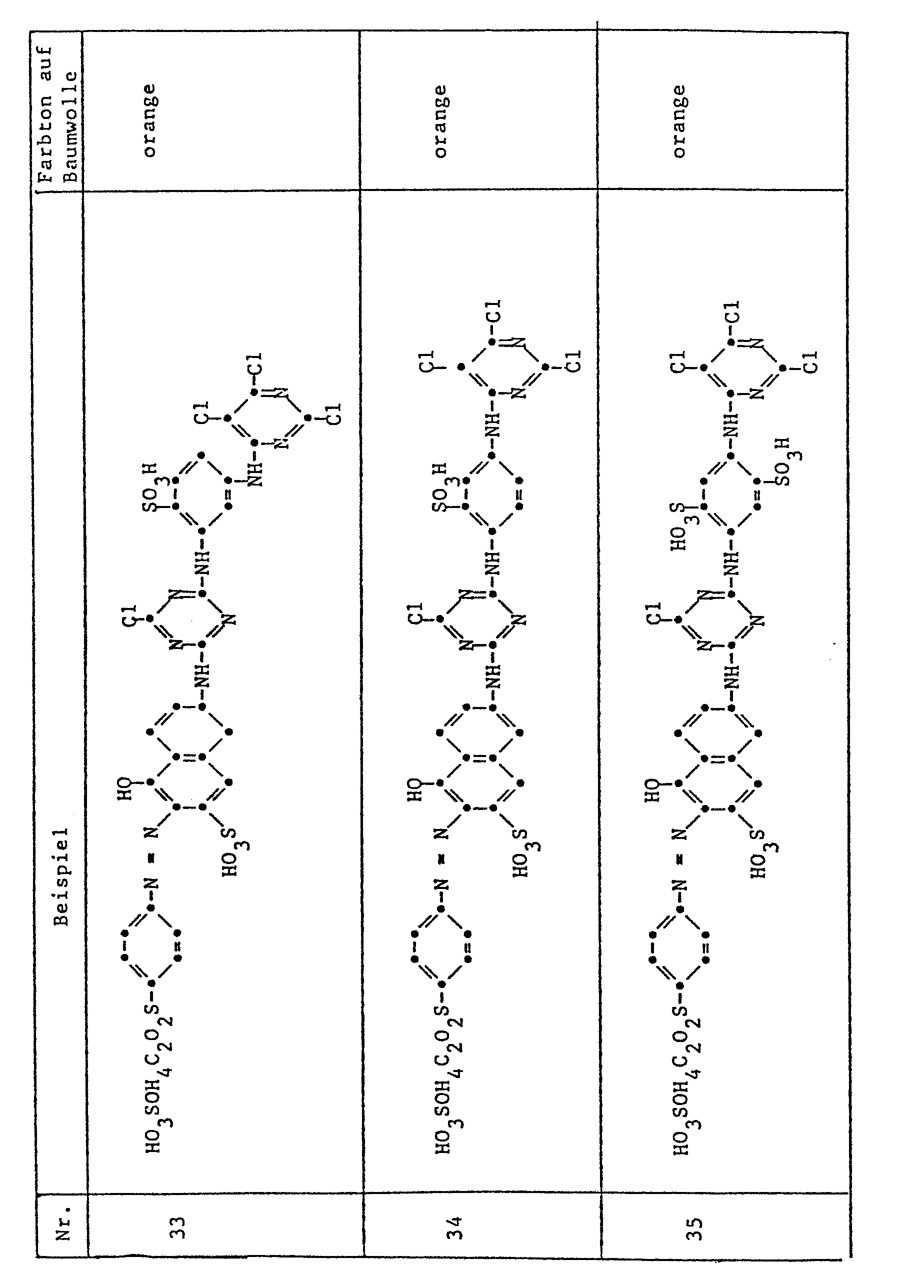

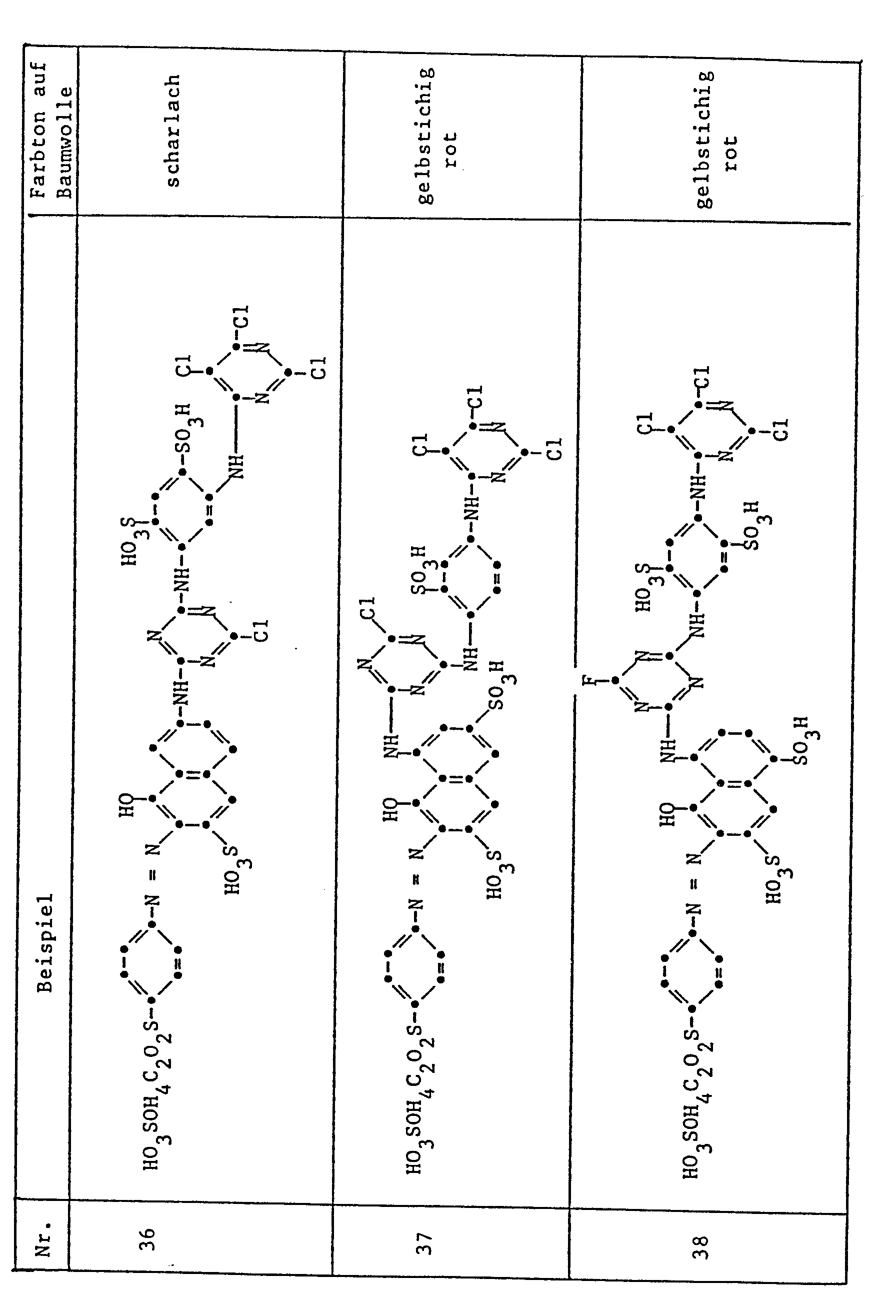

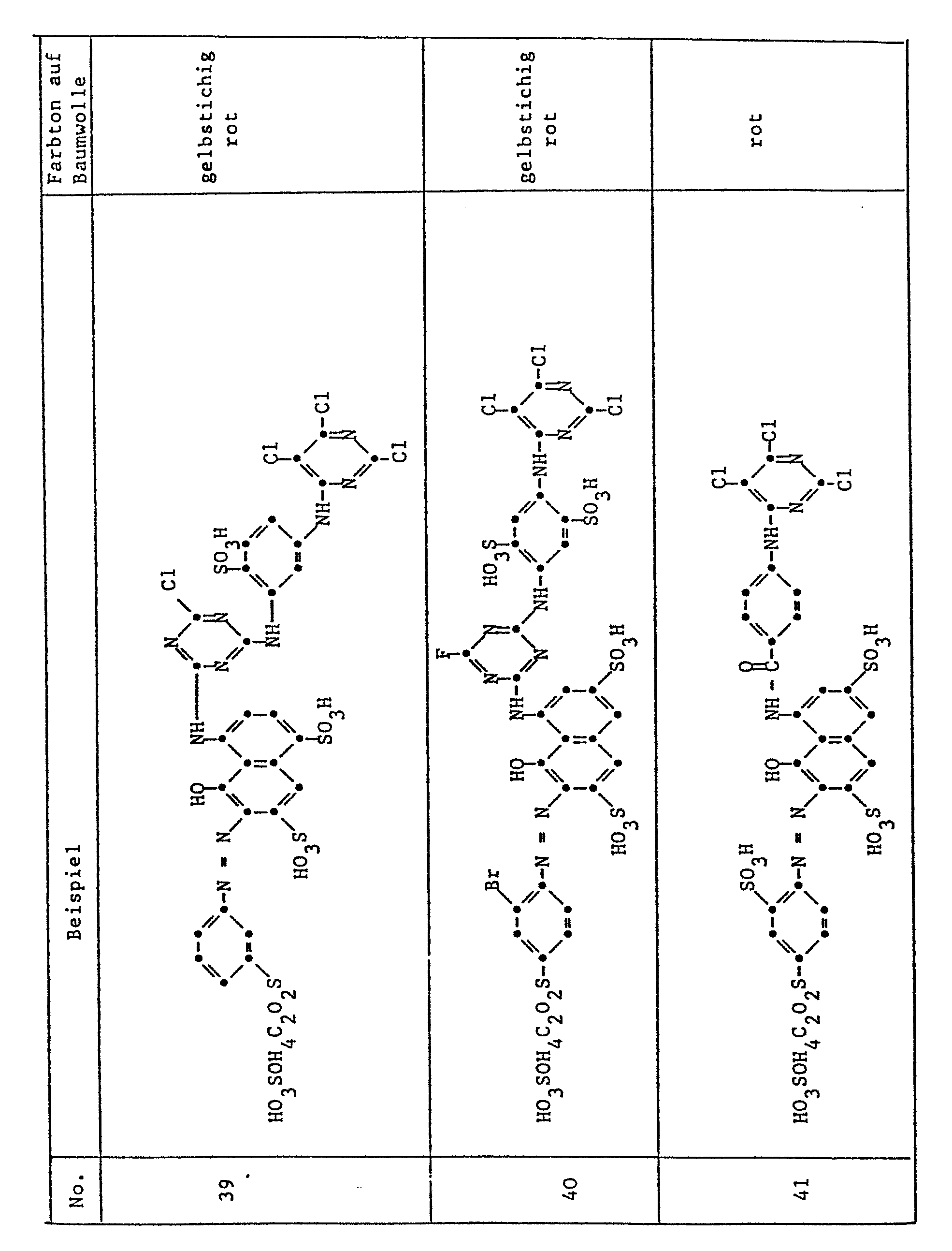

### Beispiel 42

Ein Gemisch aus einer neutralen Lösung vcn28,1 Teilen Anilin-4-ß-sulfato- äthylsulfon in 150 Teilen Wasser und 20,3 Volumenteilen einer wässrigen 5n-Natriumnitritlösung wird bei 0 bis 5°C unter Rühren in ein Gemisch aus 26 Volumenteilen einer 3lZigen wässrigen Salzsäure und 150 Teilen Eis einlaufen gelassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 1,5 bis 2,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:
18,8 Teile 1,3-Diaminobenzol-4-sulfonsäure werden in 200 Teile Wasser eingetragen und mit Natriumcarbonat neutralisiert. Bei 50 bis 60°C werden innert 8 Stunden 23 Teile 2,4,5,6-Tetrachlorpyrimidn zugetropft. Das pH wird mit 2n NaOH bei 6,0 konstant gehalten und die Temperatur darf nicht über 65°C steigen. Nach beendeter Kondensation wird die feine Suspension filtriert und mit 5X Natriumchloridlösung gewaschen. Das Pressgut wird mit 35 Volumenteilen einer 31%igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel 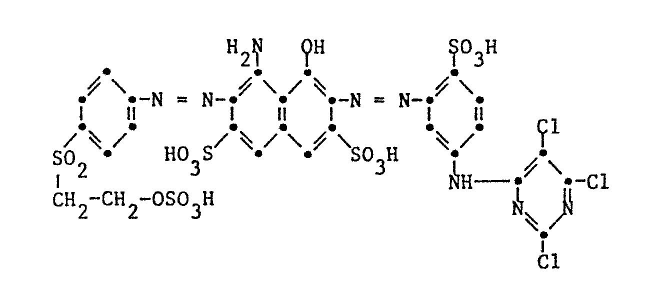
in Form eines schwarzen, elektrolythaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Man erhält weitere Reaktivfarbstoffe in analoger Weise wie im vorherigen Beispiel durch Umsetzung einer Diazokomponente mit einer β-Sulfatoäthylsulfonylgruppe mit einer 1-Amino-8-naphthol-3,6- oder -4,6-disulfonsäure mit anschliessender Kupplung einer zweiten Diazokomponente aus einem Kondensationsprodukt einer Diaminobenzol-Verbindung mit 2,4,5,6-Tetrachlorpyrimidin. Setzt man hierfür die in den nachfolgenden Tabellenbeispiele in Verbindung mit der nachstehenden allgemeinen Formel 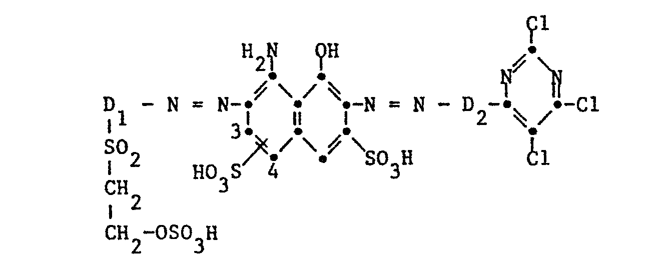
ersichtlichen Ausgangskomponenten ein, so erhält man erfindungsgemässe Disazoverbindungen entsprechend der obigen Formel, die sehr wertvolle faserreaktive Farbstoffeigenschaften besitzen und Cellulosefasermaterialien wie auch Wolle in echten Tönen mit den angegebenen Nuancen färben.

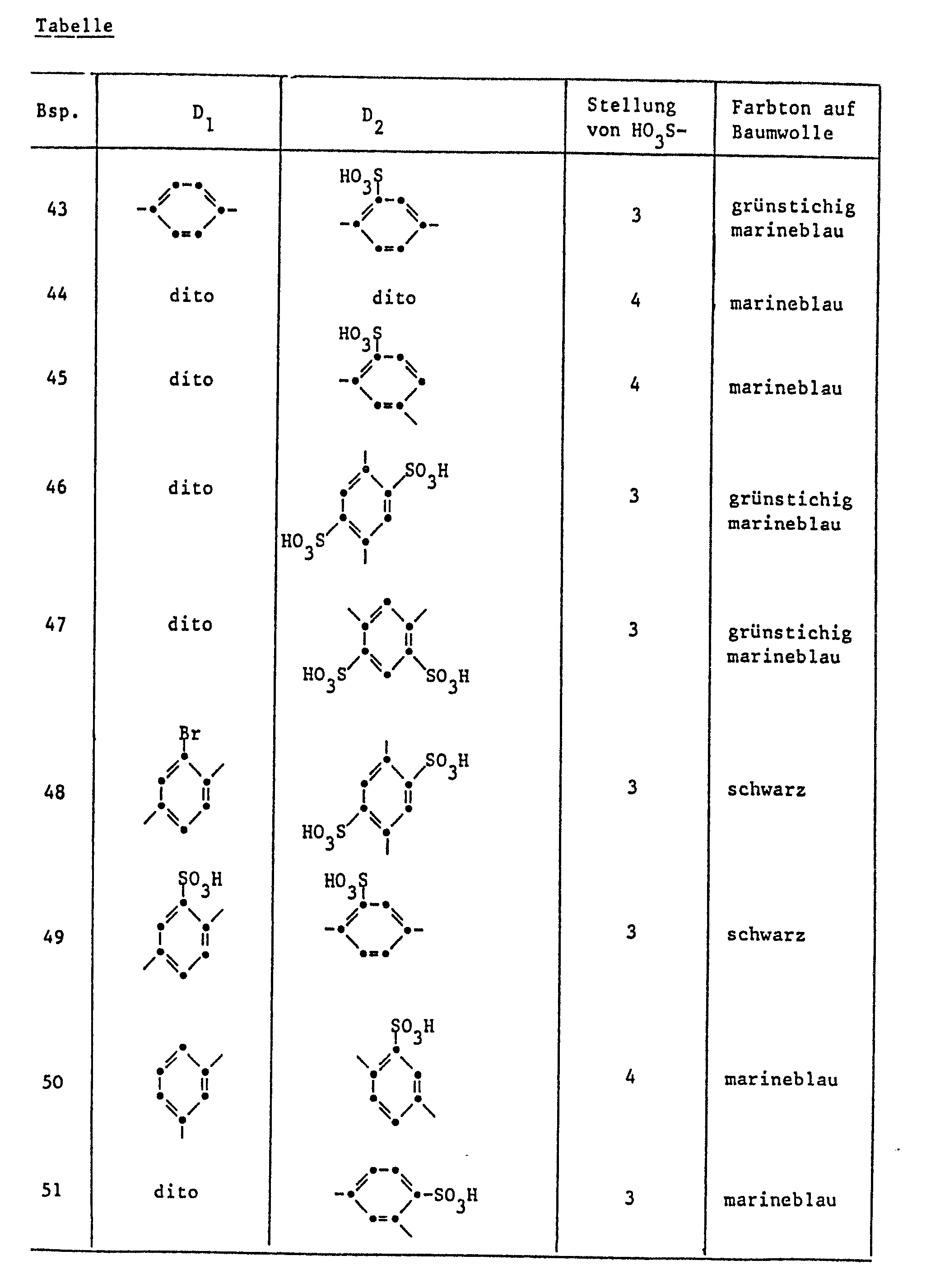

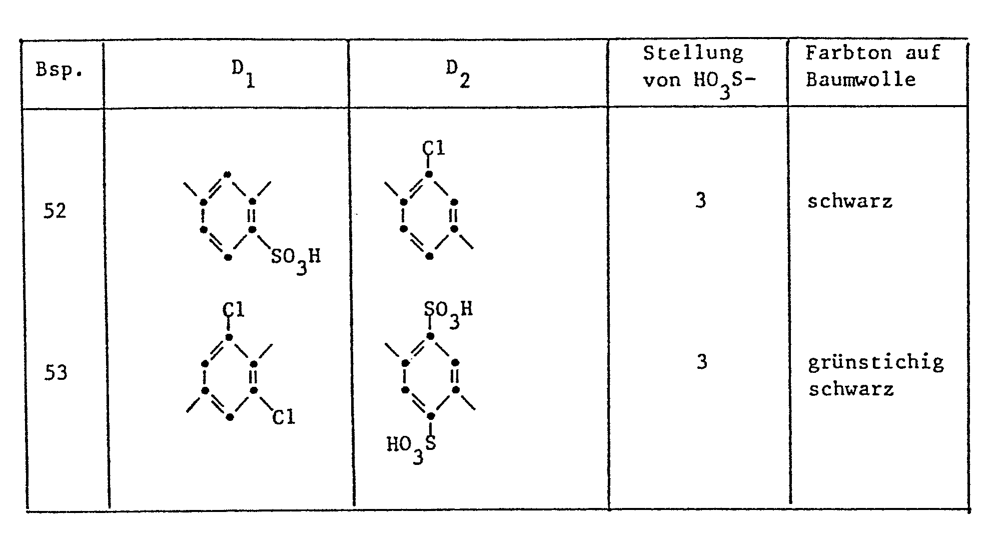

### Beispiel 54

18,8 Teile 1,3-Diaminobenzol-4-sulfonsäure werden in 200 Teile Wasser eingetragen und mit Natriumcarbonat neutralisiert. Bei 50 bis 60°C werden innert einer Stunde 23 Teile 2,4,5,6-Tetrachlorpyrimidin zugetropft. Das pH wird mit 2n NaOH bei 6,0 konstant gehalten und die Temperatur darf nicht über 65°C steigen. Nach beendeter Kondensation wird die feine Suspension filtriert und mit 52 Natriumchloridlösung gewaschen. Das Pressgut wird mit 35 Volumenteilen einer 31%igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich wird danach überschüssige salpetrige Säure mit etwas Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Soda bei 2 bis 3,0 gehalten. Nachdem die erste Kupplungsreaktion beendet ist, wird die gebildete Monoazoverbindung mit einer Diazoniumsalzlösung in der zweiten Kupplungsreaktion umgesetzt.

### Diese Diäzoniumsalzlösung wird wie folgt hergestellt:

Ein Gemisch aus einer neutralen Lösung von 28,1 Teilen Anilin-4-ß- sulfatoäthylsulfon in 150 Teilen Wasser und 20,3 Volumenteilen einer wässrigen 5n-Natriumnitritlösung wird bei 0 bis 5°C unter Rühren in ein Gemisch aus 26 Volumenteilen einer 31%igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel 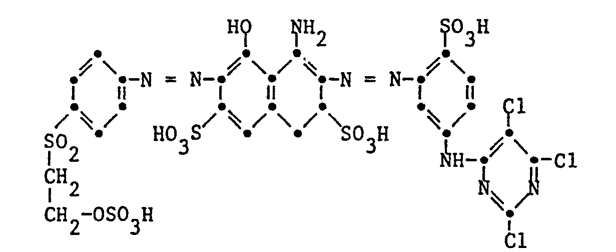
in Form eines schwarzen, elektrolythaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs-und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Man verfährt in analoger Weise, wie im vorherigen Beispiel beschrieben, zur Herstellung von erfindungsgemässen Disazoverbindungen entsprechend der allgemeinen Formel 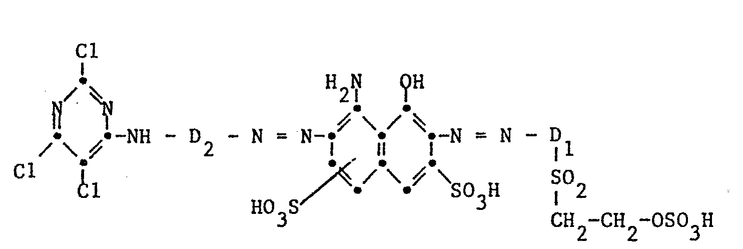
die in den nachfolgenden Tabellenbeispielen durch die angegebenen Formelreste charakterisiert sind, indem man entsprechend zuerst eine Diazokomponente herstellt, die das Reaktionsprodukt von 2,4,5,6-Tetrachlorpyrimidin und einer Diaminobenzol-Verbindung ist, diese sodann diazotiert und auf 1-Amino-8-naphthol-3,6- oder -4,6-disulfonsäure kuppelt und darauf die hieraus gebildete Monoazoverbindung mit einem Anilinderivat mit einer β-Sulfatoäthylsulfonylgruppe als zweite Diazokomponente umsetzt. Diese Reaktionskomponenten sind aus den Tabellenbeispielen in Verbindung mit der obigen allgemeinen Formel ersichtlich. Die in diesen Beispiel 42 bis 51 beschriebenen erfindüngsgemässen Disazoverbindungen zeigen ebenfalls sehr gute faserreaktive Farbstoffeigenschaften und liefern beispielsweise auf Baumwollmaterialien echte Färbungen mit den in den Beispielen angegebenen Nuancen.

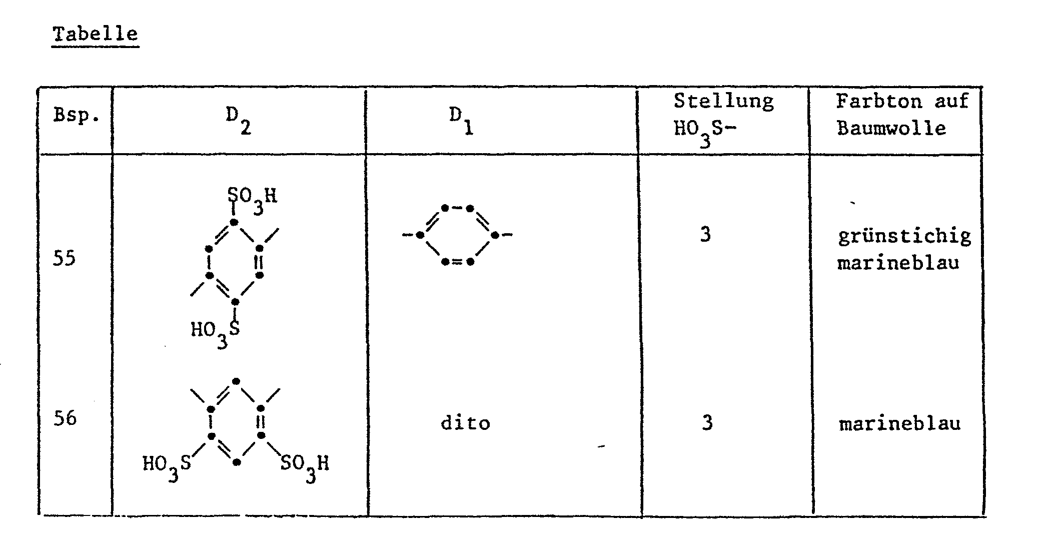

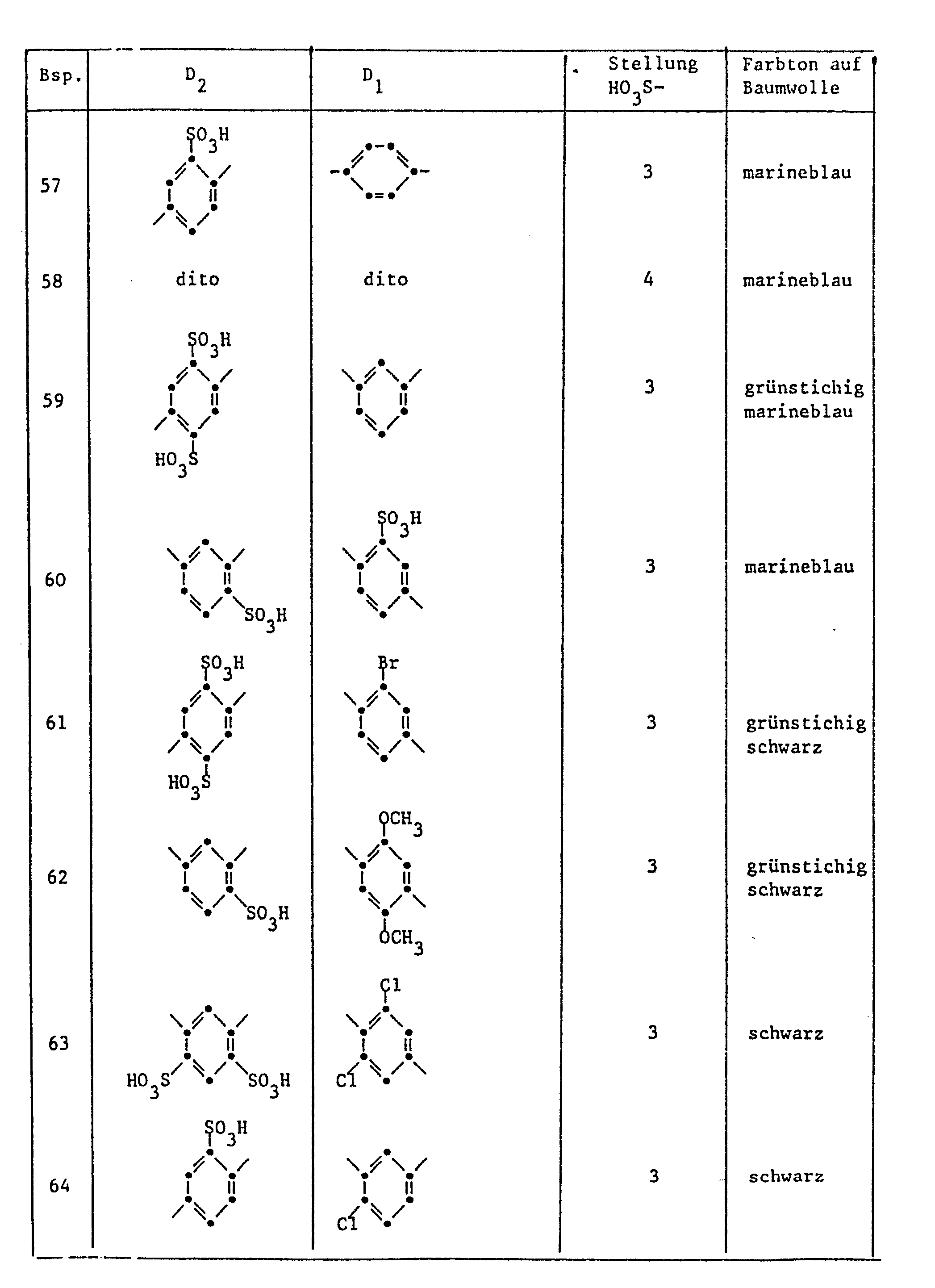

### Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift 11

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein..Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70Z seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75X seines Gewichtes zunimmt, und dann getrocknet. Dann imprägniert man das Gewebe mit einer 20°C Warmen Lösung, die pro Liter 4 g Natriumhydroxyd und 300 g Natriumchlorid enthält, quetscht auf 75i Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

### Druckvorschrift II

5 Teile des gemäss Beispiel 1 erhaltenen Reaktivfarbstoffes werden unter schnellem Rühren in 100 Teile einer Stammverdickung, enthaltend 50 Teile 5Zige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 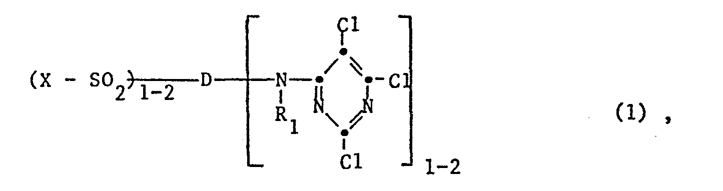
worin D der Rest eines Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder ein gegebenenfalls substituierter C₁₋₄-Alkylrest, und X die Vinyl-, β-Sulfatoäthyl-, β-Thiosulfatoäthyl-, β-Chloräthyl- oder β-Acetoxyäthyl-Gruppe ist, ausgenommen den Reaktivfarbstoff des Beispiels 38 der JP-OS 57-57754.

2. Reaktivfarbstoffe gemäss Anspruch 1, worin D der Rest eines Mono-oder Disazofarbstoffes oder eines Metallkomplexazofarbstoffes ist.

3. Reaktivfarbstoffe gemäss Anspruch 2, der Formel 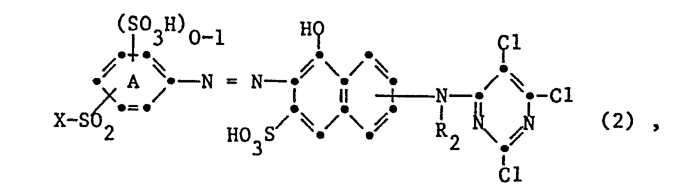
worin R₂ Wasserstoff, Methyl oder Aethyl ist, X die für Anspruch 2 geltende Bedeutung hat, und der Benzolring A gegebenenfalls weitersubstituiert ist.

4. Reaktivfarbstoffe gemäss Anspruch 2, der Formel 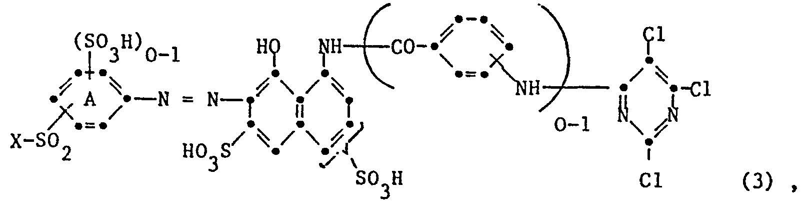 worin X die für Anspruch 2 geltende Bedeutung hat, und der Benzolring A gegebenenfalls weitersubstituiert ist.

5. Reaktivfarbstoffe gemäss Anspruch 2, der Formel 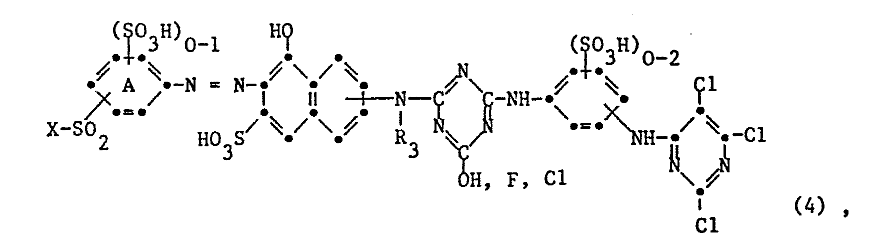
worin R₃ Wasserstoff, Methyl oder Aethyl ist, X die für Anspruch 2 geltende Bedeutung hat, und der Benzolring A gegebenenfalls weitersubstituiert ist.

6. Reaktivfarbstoffe gemäss Anspruch 2, der Formel 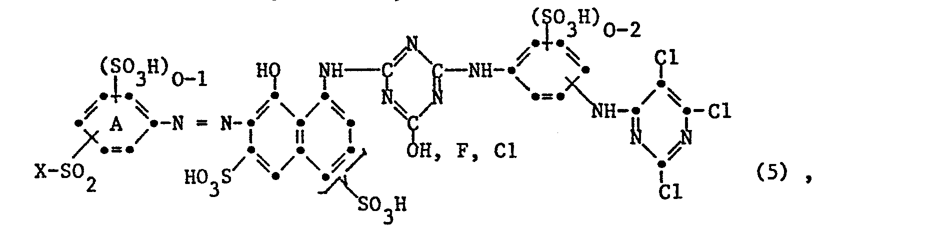
worin X die für Anspruch 2 geltende Bedeutung hat, und der Benzolring A gegebenenfalls weitersubstituiert ist.

7. Reaktivfarbstoffe gemäss Anspruch 2, der Formel 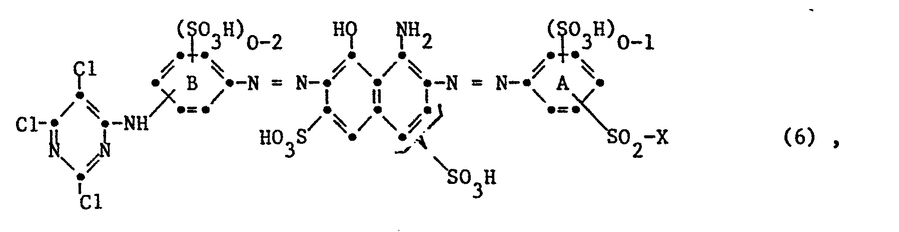
worin X die für Anspruch 2 geltende Bedeutung hat, und die Benzolringe A und B unabhängig voneinander gegebenenfalls weitersubstituiert sind, wobei die in Anspruch 1 angegebene Einschränkung gilt.

8. Reaktivfarbstoffe gemäss Anspruch 2, der Formel 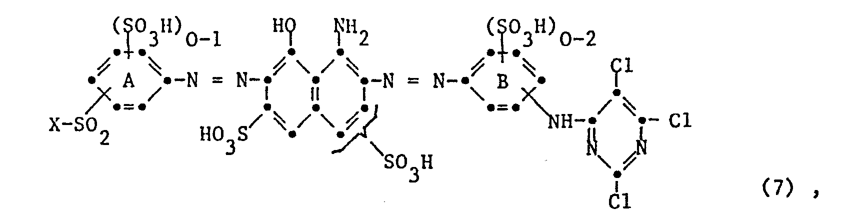
worin X die für Anspruch 2 geltende Bedeutung hat, und die Benzolringe A und B unabhängig voneinander gegebenenfalls weitersubstituiert sind.

9. Reaktivfarbstoffe gemäss Anspruch 2, der Formel 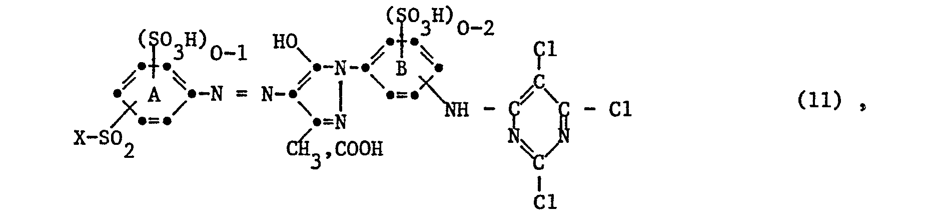
worin X die für Anspruch 2 geltende Bedeutung hat, und die Benzolringe A und B unabhängig voneinander gegebenenfalls weitersubstituiert sind.

10. Reaktivfarbstoffe gemäss einem der Ansprüche 3 bis 9, worin die Benzolringe A bzw. B nicht weitersubstituiert sind.

11. Reaktivfarbstoffe gemäss einem der Ansprüche 3 bis 10, worin X die Vinyl- oder β-Sulfatoäthyl-Gruppe ist.

12. Verfahren zur Herstellung von Reaktivfarbstoffen gemäss Anspruch 1, dadurch gekennzeichnet, dass man Farbstoffe der Formel 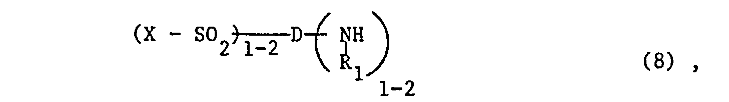
worin D, R₁ und X die in Anspruch 1 angegebenen Bedeutungen haben, oder ihre Vorprodukte mit 2,4,5,6-Tetrachlorpyrimidin zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

13. Verwendung der Reaktivfarbstoffe gemäss Anspruch 1, zum Färben oder Bedrucken von cellulosehaltigen Fasermaterialien.

14. Verwendung gemäss Anspruch 13, zum Färben oder Bedrucken von Baumwolle.
